(19) Europäisches Patentamt / European Patent Office / Office européen des brevets

(11) **EP 4 456 468 A1**

(12) **EUROPEAN PATENT APPLICATION**
published in accordance with Art. 153(4) EPC

(43) Date of publication:
**30.10.2024 Bulletin 2024/44**

(21) Application number: **23742870.1**

(22) Date of filing: **17.01.2023**

(51) International Patent Classification (IPC):
**H04L 5/00** (2006.01)

(52) Cooperative Patent Classification (CPC):
**H04L 5/00**

(86) International application number:
**PCT/CN2023/072521**

(87) International publication number:
**WO 2023/138555 (27.07.2023 Gazette 2023/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.01.2022 CN 202210071464**

(71) Applicant: **Shanghai Tuiluo Communication Technology Partnership (Limited Partnership) Shanghai 201203 (CN)**

(72) Inventors:
• **WU, Lu**
  **Shanghai 201206 (CN)**
• **ZHANG, Xiaobo**
  **Shanghai 201206 (CN)**

(74) Representative: **Zhang, Fan**
  **Am Quälenberg 3A**
  **38124 Braunschweig (DE)**

(54) **METHOD FOR NODE USED FOR WIRELESS COMMUNICATION, AND APPARATUS**

(57) Disclosed in the present application are a method for a node used for wireless communication, and an apparatus. A first node receives a first signaling, and sends, in a target time-frequency resource block, a first signal, a second signal, a first reference signal and a second reference signal. The first signaling is used for indicating the target time-frequency resource block; the first signaling is used for indicating a first reference signal resource group and a second reference signal resource group, the first reference signal resource group being used for determining an antenna port for sending the first signal, and the second reference signal resource group being used for determining an antenna port for sending the second signal; the first reference signal is associated with the first reference signal resource group and the second reference signal is associated with the second reference signal resource group; the time density of the first reference signal and the time density of the second reference signal are related to whether the first signal and the second signal bear the same transport block.

FIG. 1

## Description

## BACKGROUND

## TECHNICAL FIELD

The present application relates to transmission methods and devices in wireless communication systems, and in particular to a transmission method and device of a radio signal in a wireless communication system supporting cellular networks.

## RELATED ART

In 5G NR (New Radio) system, multiple antenna panels will be configured for both base station and terminal. NR Rel-16 standard can already support the base station to transmit radio signals through multiple antenna panels at the same time, but the terminal only supports transmission based on antenna panel selection even if it is configured with multiple antenna panels, i.e., radio transmission is only allowed to be performed on one antenna panel at the same time. In the future evolution of 5G NR systems, supporting the simultaneous transmission of radio signals on multiple antenna panels on both base station and terminal to improve system capacity is an important technical direction.

## SUMMARY

Inventors have found through researches that how to support transmission of multiple signals is a key issue that needs to be addressed.

To address the above problem, the present application provides a solution. It should be noted that although the uplink and downlink is used as an example in the above description, the application is also applicable to other scenarios, such as sidelink, where similar technical effects can be achieved. Additionally, the adoption of a unified solution for various scenarios (including but not limited to Downlink, Uplink and Sidelink) contributes to the reduction of hardcore complexity and costs. If no conflict is incurred, embodiments in any node in the present application and the characteristics of the embodiments are also applicable to any other node, and vice versa. And the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

The present application provides a method in a first node for wireless communications, comprising:

receiving a first signaling; and
transmitting a first signal, a second signal, a first reference signal, and a second reference signal in a target time-frequency resource block;
herein, the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB (Transport Block).

In one embodiment, a problem to be solved in the present application comprises: a time density of multi-reference signal transmission.

According to one aspect of the present application, it is characterized in that when the first signal and the second signal carry a same TB, the first signaling indicates a target MCS, both an MCS of the first signal and an MCS of the second signal are the target MCS, the target MCS is used to determine a target time density, and a time density of the first reference signal and a time density of the second reference signal are equal to the target time density; when the first signal and the second signal carry different TBs, the first signaling indicates a first MCS and a second MCS, an MCS of the first signal is the first MCS, an MCS of the second signal is the second MCS, the first MCS is used to determine a time density of the first reference signal, and the second MCS is used to determine a time density of the second reference signal.

According to one aspect of the present application, it is characterized in that both a time density of the first reference signal and a time density of the second reference signal are equal to a target time density; when the first signal and the second signal carry a same TB, the first signaling indicates a target MCS, both an MCS of the first signal and an MCS of the second signal are the target MCS, and the target MCS is used to determine the target time density; when the first signal and the second signal carry different TBs, the first signaling indicates a first MCS and a second MCS, an MCS of the first signal is the first MCS, an MCS of the second signal is the second MCS, the first MCS is used to determine a first time density, the second MCS is used to determine a second time density, and at least one of the first time density or the second time density is used to determine the target time density.

According to one aspect of the present application, it is characterized in that transmit power of the first reference signal per RE is linearly correlated with a linear value of a first target factor, and transmit power of the second reference signal per RE is linearly correlated with a linear value of a second target factor; the first target factor and the second target factor are related to whether the first signal and the second signal carry a same TB.

According to one aspect of the present application, it is characterized in that when the first signal and the second signal carry a same TB and the first signal and the second signal are orthogonal in time domain, the first target factor is equal to a second factor, and the second target factor is equal to a fourth factor; when the first signal and the second signal carry different TBs and time-frequency resources occupied by the first signal overlap with time-frequency resources occupied by the second signal, the first target factor is equal to a sum of a second factor and a third factor, and the second target factor is equal to a sum of a fourth factor and a fifth factor; the second factor is related to a number of layer(s) of the first signal, and the fourth factor is related to a number of layer(s) of the second signal.

According to one aspect of the present application, it is characterized in that when the first signal and the second signal carry a same TB, a number of layer(s) of the first signal and a number of layer(s) of the second signal are not greater than a reference number of layer(s); when the first signal and the second signal carry different TBs, a sum of the number of layer(s) of the first signal and the number of layer(s) of the second signal is not greater than the reference number of layer(s).

According to one aspect of the present application, it is characterized in that when the first signal and the second signal carry a same TB, time-domain resources occupied by the first signal are orthogonal to time-domain resources occupied by the second signal; or, the first signal and the second signal carry different TBs, and time-frequency resources occupied by the first signal overlap with time-frequency resources occupied by the second signal.

According to one aspect of the present application, comprising:

> transmitting a first demodulation reference signal and a second demodulation reference signal in the target time-frequency resource block;
> herein, antenna port(s) of the first reference signal is(are) associated with antenna port(s) of the first demodulation reference signal; antenna port(s) of the second reference signal is(are) associated with antenna port(s) of the second demodulation reference signal.

The present application provides a method in a second node for wireless communications, comprising:

> transmitting a first signaling; and
> receiving a first signal, a second signal, a first reference signal, and a second reference signal in a target time-frequency resource block;
> herein, the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB.

According to one aspect of the present application, it is characterized in that when the first signal and the second signal carry a same TB, the first signaling indicates a target MCS, both an MCS of the first signal and an MCS of the second signal are the target MCS, the target MCS is used to determine a target time density, and a time density of the first reference signal and a time density of the second reference signal are equal to the target time density; when the first signal and the second signal carry different TBs, the first signaling indicates a first MCS and a second MCS, an MCS of the first signal is the first MCS, an MCS of the second signal is the second MCS, the first MCS is used to determine a time density of the first reference signal, and the second MCS is used to determine a time density of the second reference signal.

According to one aspect of the present application, it is characterized in that both a time density of the first reference signal and a time density of the second reference signal are equal to a target time density; when the first signal and the second signal carry a same TB, the first signaling indicates a target MCS, both an MCS of the first signal and an MCS of the second signal are the target MCS, and the target MCS is used to determine the target time density; when the first signal and the second signal carry different TBs, the first signaling indicates a first MCS and a second MCS, an MCS of the first signal is the first MCS, an MCS of the second signal is the second MCS, the first MCS is used to determine a first time density, the second MCS is used to determine a second time density, and at least one of the first time density or the second time density is used to determine the target time density.

According to one aspect of the present application, it is characterized in that transmit power of the first reference signal per RE is linearly correlated with a linear value of a first target factor, and transmit power of the second reference signal per RE is linearly correlated with a linear value of a second target factor; the first target factor and the second target factor are related to whether the first signal and the second signal carry a same TB.

According to one aspect of the present application, it is characterized in that when the first signal and the second signal carry a same TB and the first signal and the second signal are orthogonal in time domain, the first target factor is equal to a second factor, and the second target factor is equal to a fourth factor; when the first signal and the second signal carry different TBs and time-frequency resources occupied by the first signal overlap with time-frequency resources occupied by the second signal, the first target factor is equal to a sum of a second factor and a third factor, and the second target factor is equal to a sum of a fourth factor and a fifth factor; the second factor is related to a number of layer(s) of the first signal, and the fourth factor is related to a number of layer(s) of the second signal.

According to one aspect of the present application, it is characterized in that when the first signal and the second signal carry a same TB, a number of layer(s) of the first signal and a number of layer(s) of the second signal are not greater than a reference number of layer(s); when the first signal and the second signal carry different TBs, a sum of the number of layer(s) of the first signal and the number of layer(s) of the second signal is not greater than the reference number of layer(s).

According to one aspect of the present application, it is characterized in that when the first signal and the second signal carry a same TB, time-domain resources occupied by the first signal are orthogonal to time-domain resources occupied by the second signal; or, the first signal and the second signal carry different TBs, and time-frequency resources occupied by the first signal overlap with time-frequency resources occupied by the second signal.

According to one aspect of the present application, comprising:

receiving a first demodulation reference signal and a second demodulation reference signal in the target time-frequency resource block;
herein, antenna port(s) of the first reference signal is(are) associated with antenna port(s) of the first demodulation reference signal; antenna port(s) of the second reference signal is(are) associated with antenna port(s) of the second demodulation reference signal.

The present application provides a first node for wireless communications, comprising:

a first receiver, receiving a first signaling; and
a first transmitter, transmitting a first signal, a second signal, a first reference signal, and a second reference signal in a target time-frequency resource block;
herein, the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB.

The present application provides a second node for wireless communications, comprising:

a second transmitter, transmitting a first signaling; and
a second receiver, receiving a first signal, a second signal, a first reference signal, and a second reference signal in a target time-frequency resource block;
herein, the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB.

In one embodiment, the present application has the following advantages over conventional schemes: the proposed transmit power scheme takes into account the factors of beam direction, antenna panel, and transmitting/receiving nodes, and is suitable for transmission under multi-beam directions, multi-antenna panels, and multi-transmitting/receiving nodes.

BRIEF DESCRIPTION OF THE DRAWINGS

Other features, objects and advantages of the present application will become more apparent from the detailed description of non-restrictive embodiments taken in conjunction with the following drawings:

FIG. 1 illustrates a flowchart of a first signaling, a first signal, a second signal, a first reference signal and a second reference signal according to one embodiment of the present application;

FIG. 2 illustrates a schematic diagram of a network architecture according to one embodiment of the present application;

FIG. 3 illustrates a schematic diagram of a radio protocol architecture of a user plane and a control plane according to one embodiment of the present application;

FIG. 4 illustrates a schematic diagram of a first communication device and a second communication device according to one embodiment of the present application;

FIG. 5 illustrates a flowchart of transmission according to one embodiment of the present application;

FIG. 6 illustrates a schematic diagram of a time density of the first reference signal and a time density of the second reference signal being related to whether the first signal and the second signal carry a same TB according to one embodiment of the present application;

FIG. 7 illustrates a schematic diagram of a time density of the first reference signal and a time density of the second reference signal being related to whether the first signal and the second signal carry a same TB according to another embodiment of the present application;

FIG. 8 illustrates a schematic diagram of transmit power of the first reference signal per RE and transmit power of the second reference signal per RE according to one embodiment of the present application;

FIG. 9 illustrates a schematic diagram of the first target factor and the second target factor being related to whether the first signal and the second signal carry a same TB according to one embodiment of the present application;

FIG. 10 illustrates a schematic diagram of a number of layer(s) of the first signal and a number of layer(s) of the second signal according to one embodiment of the present application;

FIG. 11 illustrates a schematic diagram of a relation between the first signal and the second signal according to one embodiment of the present application;

FIG. 12 illustrates a structure block diagram of a processor in a first node according to one embodiment of the present application;

FIG. 13 illustrates a structure block diagram of a processor in a second node according to one embodiment of the present application.

## DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

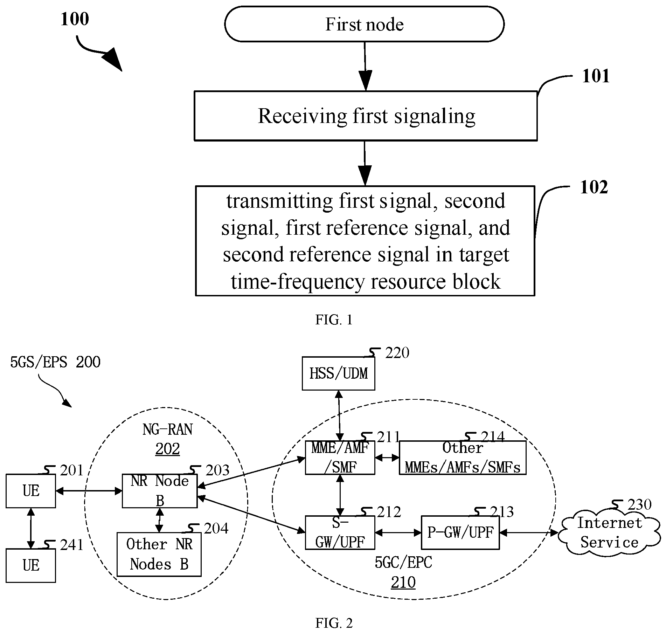

Embodiment 1 illustrates a flowchart of a first signaling, a first signal, a second signal, a first reference signal and a second reference signal according to one embodiment of the present application, as shown in FIG. 1. In 100 illustrated by FIG. 1, each box represents a step.

In Embodiment 1, the first node in the present application receives a first signaling in step 101; transmits a first signal, a second signal, a first reference signal, and a second reference signal in a target time-frequency resource block in step 102; herein, the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB.

In one embodiment, the first signaling is a physical-layer signaling.

In one embodiment, the first signaling is a Downlink Control Information (DCI) signaling.

In one embodiment, the first signaling is a DCI signaling used to schedule a PUSCH (Physical Uplink Shared CHannel).

In one embodiment, the first signaling is transmitted on a Physical Downlink Control Channel (PDCCH).

Typically, the target time-frequency resource block comprises multiple Resource Elements (REs).

Typically, one RE occupies one subcarrier in frequency domain and one symbol in time domain.

In one embodiment, the symbol is a single carrier symbol.

In one embodiment, the symbol is a multicarrier symbol.

In one embodiment, the multicarrier symbol is an Orthogonal Frequency Division Multiplexing (OFDM) symbol.

In one embodiment, the multicarrier symbol is a Single Carrier-Frequency Division Multiple Access (SC-FDMA) symbol.

In one embodiment, the multicarrier symbol is a Discrete Fourier Transform Spread OFDM (DFT-S-OFDM) symbol.

In one embodiment, the multicarrier symbol is a Filter Bank Multicarrier (FBMC) symbol.

In one embodiment, the multicarrier symbol comprises a Cyclic Prefix (CP).

In one embodiment, the first signaling indicates frequency-domain resources occupied by the target time-frequency resource block and time-domain resources occupied by the target time-frequency resource block.

In one embodiment, the first signaling comprises a first field and a second field, the first signaling comprises the first field, the first field comprises at least one bit, and the second field comprises at least one bit; the first field comprised in the first signaling indicates frequency-domain resources occupied by the target time-frequency resource block; the second field comprised in the first signaling indicates time-domain resources occupied by the target time-frequency resource block.

In one embodiment, the first field is a Frequency domain resource assignment field, and the second field is a Time domain resource assignment field.

In one embodiment, for specific meanings of the Frequency domain resource assignment field and the Time domain resource assignment field, refer to chapter 6.1.2 in 3GPP TS38. 214.

In one embodiment, the phrase of "occupied frequency-domain resources" refers to: occupied Resource Block(s) (RB(s)).

In one embodiment, the phrase of "occupied frequency-domain resources" refers to: occupied subcarrier(s).

Typically, the phrase of "occupied time-domain resources" refers to: occupied symbol(s).

In one embodiment, the first signal and the second signal are both transmitted on PUSCH (Physical Uplink Shared Channel).

In one embodiment, the first signal and the second signal carry a same transport block (TB), or the first signal and the second signal carry different TBs.

In one embodiment, when the first signal and the second signal carry a same TB, the first signal and the second signal respectively comprise two PUSCH repetitions of the same TB.

In one embodiment, when the first signal and the second signal carry a same TB, the first signal and the second signal are respectively two PUSCHs.

In one embodiment, when the first signal and the second signal carry a same TB, the first signal occupies all layers of a PUSCH, and the second signal occupies all layers of a PUSCH.

In one embodiment, when the first signal and the second signal carry different TBs, the first signal and the second signal together consist a PUSCH.

In one embodiment, when the first signal and the second signal carry different TBs, the first signal and the second signal respectively comprise two codewords of a same PUSCH.

In one embodiment, when the first signal and the second signal carry different TBs, the first signal and the second signal respectively occupy different layers(s) of a PUSCH.

In one embodiment, the first signal and the second signal carry a same TB, and the first signal and the second signal are two PUSCHs respectively; or, the first signal and the second signal carry different TBs, and the first signal and the second signal consist a PUSCH together.

In one embodiment, the first signal and the second signal carry a same TB, and the first signal and the second signal are time division multiplexing; or, the first signal and the second signal carry different TBs, and the first signal and the second signal are space division multiplexing.

In one embodiment, the first signal and the second signal carry a same TB, and the first signal and the second signal respectively comprise two PUSCH repetitions of the same TB; or, the first signal and the second signal carry different TBs, and the first signal and the second signal consist a PUSCH together.

In one embodiment, the first signal and the second signal carry a same TB, a number of layer(s) of the first signal is equal to a number of layer(s) of PUSCH occupied by the first signal, and a number of layer(s) of the second signal is equal to a number of layer(s) of PUSCH occupied by the second signal; or, the first signal and the second signal carry different TBs, and the first signal and the second signal consist a PUSCH together.

In one embodiment, the first signal and the second signal carry a same TB, and a number of layer(s) of the first signal is the same as a number of layer(s) of the second signal; or, the first signal and the second signal carry different TBs, and the first signal and the second signal consist a PUSCH together.

In one embodiment, the meaning of the phrase that "the first signal and the second signal consist a PUSCH together" comprises: the first signal and the second signal respectively comprise two codewords of a same PUSCH.

In one embodiment, the meaning of the phrase that "the first signal and the second signal consist a PUSCH together" comprises: the first signal and the second signal respectively occupy different layers of a PUSCH.

In one embodiment, the meaning of the phrase that "the first signal and the second signal consist a PUSCH together" comprises: a number of layer(s) in the PUSCH composed of the first signal and the second signal is equal to a sum of a number of layer(s) of the first signal and a number of layer(s) of the second signal.

In one embodiment, time-frequency resources respectively occupied by the first reference signal and the second reference signal are orthogonal.

Typically, the phrase of "occupied time-frequency resources" refers to: all resource elements occupied.

In one embodiment, the first reference signal and the second reference signal are both uplink reference signals.

In one embodiment, names of the first reference signal and the second reference signal both comprise phase.

In one embodiment, names of the first reference signal and the second reference signal both comprise tracking.

In one embodiment, the first reference signal and the second reference signal are both reference signals used for phase tracking.

In one embodiment, both the first reference signal and the second reference signal are PTRSs (Phase-Tracking Reference Signals).

In one embodiment, the first reference signal is a PTRS of the first signal, and the second reference signal is a PTRS of the second signal.

In one embodiment, at least one field in the first signaling indicates the first reference signal resource group and the second reference signal resource group.

In one embodiment, the first signaling comprises a third field, the third field comprised in the first signaling indicates the first reference signal resource group and the second reference signal resource group; the third field comprises at least one bit.

In one embodiment, the first signaling comprises a third field and a fourth field, where the third field comprised in the first signaling indicates the first reference signal resource group, and the fourth field comprised in the first signaling indicates the second reference signal resource group; the third field comprises at least one bit, and the fourth field comprises at least one bit.

In one embodiment, the third field is an SRS resource indicator field.

In one embodiment, the fourth field is an SRS resource indicator field.

In one embodiment, a name of the third field comprises SRS, and a name of the fourth field comprises SRS.

In one embodiment, any reference signal resource in the first reference signal resource group and the second reference signal resource group is an SRS (Sounding Reference Signal) resource.

In one embodiment, any reference signal resource in the first reference signal resource group and second reference signal resource group is a CSI-RS (Channel State Information Reference Signal) resource.

In one embodiment, the first reference signal resource group comprises at least one SRS resource in a first SRS resource set, and the second reference signal resource group comprises at least one SRS resource in a second SRS resource set; the first SRS resource set comprises multiple SRS resources, and the second SRS resource set comprises multiple SRS resources.

In one embodiment, the first reference signal resource group comprises at least one reference signal resource in a first reference signal resource set, and the second reference signal resource group comprises at least one reference signal resource in a second reference signal resource set; the first reference signal resource set comprises multiple reference signal resources, and the second reference signal resource set comprises multiple reference signal resources.

In one subembodiment of the above embodiment, the first reference signal resource set and the second reference signal resource set are indicated by higher-layer signalings.

In one subembodiment of the above embodiment, the first reference signal resource set and the second reference signal resource set are indicated by srs-ResourceSetToAddModList parameters.

In one subembodiment of the above embodiment, the first reference signal resource set and the second reference signal resource set are indicated by an IE SRS-Config.

In one subembodiment of the above embodiment, any reference signal resource in the first reference signal resource set is an SRS resource or a CSI-RS resource, and any reference signal resource in the second reference signal resource set is an SRS resource or a CSI-RS resource.

In one subembodiment of the above embodiment, any reference signal resource in the first reference signal resource set is an SRS resource, and any reference signal resource in the second reference signal resource set is an SRS resource.

In one subembodiment of the above embodiment, a transmission scheme of the first signal is codebook-based uplink transmission, and the first reference signal resource group comprises only one reference signal resource in the first reference signal resource set.

In one embodiment, a transmission scheme of the first signal is codebook-based uplink transmission, and the first reference signal resource group comprises only one reference signal resource.

In one embodiment, a transmission scheme of the second signal is codebook-based uplink transmission, and the second reference signal resource group comprises only one reference signal resource.

In one embodiment, a transmission scheme of the second signal is codebook-based uplink transmission, and the first reference signal resource group comprises only one reference signal resource in the second reference signal resource set.

In one embodiment, a transmission scheme of the first signal is non-codebook-based uplink transmission, and a number of reference signal resource(s) comprised in the first reference signal resource group is equal to a number of layer(s) of the first signal.

In one embodiment, a transmission scheme of the second signal is non-codebook-based uplink transmission, and a number of reference signal resource(s) comprised in the second reference signal resource group is equal to a number of layer(s) of the second signal.

In one embodiment, the meaning of the phrase that "the first reference signal resource group is used to determine antenna port(s) for transmitting the first signal" comprises: antenna port(s) for transmitting the first signal is(are) the same as antenna port(s) for the first reference signal resource group; the meaning of the phrase that "the second reference signal resource group is used to determine antenna port(s) for transmitting the second signal" comprises: antenna port(s) for transmitting the second signal is(are) the same as antenna port(s) for the second reference signal resource group.

In one embodiment, the meaning of the phrase that "the first reference signal resource group is used to determine antenna port(s) for transmitting the first signal" comprises: the first node adopts same antenna port(s) as antenna port(s) of the first reference signal resource group to transmit the first signal; the meaning of the phrase that "the second reference signal resource group is used to determine antenna port(s) for transmitting the second signal" comprises: the first node adopts same antenna port(s) as antenna port(s) of the second reference signal resource group to transmit the second signal.

In one embodiment, the meaning of the phrase that "the first reference signal resource group is used to determine antenna port(s) for transmitting the first signal" comprises: a number of antenna port(s) for transmitting the first signal is the same as a number of antenna port(s) for the first reference signal resource group; the meaning of the phrase that "the second reference signal resource group is used to determine antenna port(s) for transmitting the second signal" comprises: a number of antenna port(s) for transmitting the second signal is the same as a number of antenna port(s) for the second reference signal resource group.

In one embodiment, the meaning of the phrase that "the first reference signal resource group is used to determine antenna port(s) for transmitting the first signal" comprises: antenna port(s) for transmitting the first signal and antenna port(s) of the first reference signal resource group have a same spatial relation; the meaning of the phrase that "the second reference signal resource group is used to determine antenna port(s) for transmitting the second signal" comprises: antenna port(s) for transmitting the second signal and antenna port(s) of the second reference signal resource group have a same spatial relation.

In one embodiment, the meaning of the phrase that "the first reference signal resource group is used to determine antenna port(s) for transmitting the first signal" comprises: antenna port(s) for transmitting the first signal and antenna port(s) of the first reference signal resource group have a same spatial relation; the meaning of the phrase that "the second reference signal resource group is used to determine antenna port(s) for transmitting the second signal" comprises: antenna port(s) for transmitting the second signal and antenna port(s) of the second reference signal resource group have a same spatial relation.

In one embodiment, the spatial relation comprises: Spatial Tx parameters.

In one embodiment, the spatial relation comprises: spatial domain transmission filter.

In one embodiment, the spatial relation comprises: precoding.

In one embodiment, the spatial relation comprises: beamforming.

In one embodiment, the meaning of the phrase that "the first reference signal is associated with the first reference signal resource group" comprises: antenna port(s) of the first reference signal resource group is(are) used to transmit the first reference signal; the meaning of the phrase that "the second reference signal is associated with the second reference signal resource group" comprises: antenna port(s) of the second reference signal resource group is(are) used to transmit the second reference signal.

In one embodiment, the meaning of the phrase that "the first reference signal is associated with the first reference signal resource group" comprises: antenna port(s) of the first reference signal after precoding belongs(belong) to antenna port(s) of the first reference signal resource group; the meaning of the phrase that "the second reference signal is associated with the second reference signal resource group" comprises: antenna port(s) of the second reference signal after precoding belongs(belong) to antenna port(s) of the second reference signal resource group.

In one embodiment, the meaning of the phrase that "the first reference signal is associated with the first reference signal resource group" comprises: antenna port(s) of the first reference signal after precoding is(are) the same as antenna port(s) of the first reference signal resource group; the meaning of the phrase that "the second reference signal is associated with the second reference signal resource group" comprises: antenna port(s) of the second reference signal after precoding is(are) the same as antenna port(s) of the second reference signal resource group.

In one embodiment, the meaning of the phrase that "the first reference signal is associated with the first reference signal resource group" comprises: configuration information of a reference signal resource in the first reference signal resource group comprises antenna port number(s) of the first reference signal; the meaning of the phrase that "the second reference signal is associated with the second reference signal resource group" comprises: configuration information of a reference signal resource in the second reference signal resource group comprises antenna port number(s) of the second reference signal.

In one embodiment, the meaning of the phrase that "the first reference signal is associated with the first reference signal resource group" comprises: the first reference signal resource group is used to determine antenna port(s) of the first reference signal after precoding;

the meaning of the phrase that "the second reference signal is associated with the second reference signal resource group" comprises: the second reference signal resource group is used to determine antenna port(s) of the second reference signal after precoding.

In one embodiment, the meaning of the phrase that "the first reference signal is associated with the first reference signal resource group" comprises: the first reference signal resource group is used to determine antenna port(s) for transmitting the first signal, and antenna port(s) of the first reference signal after precoding belongs(belong) to antenna port(s) of the first signal; the meaning of the phrase that "the second reference signal is associated with the second reference signal resource group" comprises: the second reference signal resource group is used to determine antenna port(s) for transmitting the second signal, and antenna port(s) of the second reference signal after precoding belongs(belong) to antenna port(s) of the second signal.

In one embodiment, the meaning of the phrase that "the first reference signal is associated with the first reference signal resource group" comprises: antenna port(s) of the first reference signal after precoding and antenna port(s) of the first reference signal resource group have a same spatial relation; the meaning of the phrase that "the second reference signal is associated with the second reference signal resource group" comprises: antenna port(s) of the second reference signal after precoding and antenna port(s) of the second reference signal resource group have a same spatial relation.

In one embodiment, the meaning of the phrase that "the first reference signal is associated with the first reference signal resource group" comprises: antenna port(s) of the first reference signal is(are) associated with an antenna port of the first demodulation reference signal; the meaning of the phrase that "the second reference signal is associated with the second reference signal resource group" comprises: antenna port(s) of the second reference signal is(are) associated with an antenna port of the second demodulation reference signal.

In one embodiment, antenna port(s) of the first reference signal is(are) $\tilde{p}_j$, where j is a non-negative integer; antenna port(s) of the first reference signal after precoding is $p_0, p_1, ..., p_{\rho-1}$, where $\rho$ is a non-negative integer.

In one embodiment, antenna port(s) of the second reference signal is(are) $\tilde{p}_j$, where j is a non-negative integer; antenna port(s) of the second reference signal after precoding is $p_0, p_1, ..., p_{\rho-1}$, where $\rho$ is a non-negative integer.

Typically, for specific meanings of the $\tilde{p}_j$ and the $p_0, p_1, ..., p_{\rho-1}$, refer to chapter 6 in 3GPP TS38. 211.

In one embodiment, the time density is a positive integer.

In one embodiment, a time density of the first reference signal is a positive integer, and a time density of the second reference signal is a positive integer.

In one embodiment, the smaller a time density of a reference signal, the denser the reference signal in time; the greater the time density of a reference signal, the sparser the reference signal in time.

In one embodiment, a time density of a reference signal is equal to a time interval between two adjacent symbols occupied by the reference signal.

In one embodiment, a time density of a reference signal is equal to a number of symbol(s) between two adjacent symbols occupied by the reference signal.

In one embodiment, a time density of a reference signal is equal to a difference value between indexes of two adjacent symbols occupied by the reference signal.

In one embodiment, a time interval between two symbols is a number of symbol(s) comprised between the two symbols.

In one embodiment, the meaning of the phrase that "a time density of the first reference signal and a time density of the second reference signal are related to whether the first signal and the second signal carry a same TB" comprises: when the first signal and the second signal carry a same TB, a time density of the first reference signal is the same as a time density of the second reference signal; when the first signal and the second signal carry different TBs, a time density of the first reference signal is different from a time density of the second reference signal.

In one embodiment, the meaning of the phrase that "a time density of the first reference signal and a time density of the second reference signal are related to whether the first signal and the second signal carry a same TB" comprises: when the first signal and the second signal carry a same TB, a time density of the first reference signal is the same as a time density of the second reference signal; when the first signal and the second signal carry different TBs, a time density of the first reference signal and a time density of the second reference signal are respectively determined.

In one embodiment, the meaning of the phrase that "a time density of the first reference signal and a time density of the second reference signal are related to whether the first signal and the second signal carry a same TB" comprises: when the first signal and the second signal carry a same TB, a time density of the first reference signal is the same as a time density of the second reference signal; when the first signal and the second signal carry different TBs, a modulation and coding scheme (MCS) of the first signal is used to determine a time density of the first reference signal, and an MCS of the second signal is used to determine a time density of the second reference signal.

In one embodiment, the meaning of the phrase that "a time density of the first reference signal and a time density of the second reference signal are related to whether the first signal and the second signal carry a same TB" comprises: a time density of the first reference signal and a time density of the second reference signal are related to whether an MCS of the first signal and an MCS of the second signal are the same, and whether an MCS of the first signal and an MCS of the second signal are the same is related to whether the first signal and the second signal carry a same TB.

In one embodiment, the meaning of the phrase that "whether an MCS of the first signal and an MCS of the second signal are the same depends on whether the first signal and the second signal carry a same TB" comprises: when the first signal and the second signal carry a same TB, an MCS of the first signal is the same as an MCS of the second signal; when the first signal and the second signal carry different TBs, an MCS of the first signal and an MCS of the second signal are the same or different.

In one embodiment, the meaning of the phrase that "whether an MCS of the first signal and an MCS of the second signal are the same depends on whether the first signal and the second signal carry a same TB" comprises: when the first signal and the second signal carry a same TB, the first signaling indicates a target MCS, both an MCS of the first signal and an MCS of the second signal are the target MCS; when the first signal and the second signal carry different TBs, the first signaling indicates a first MCS and a second MCS, an MCS of the first signal is the first MCS, an MCS of the second signal is the second MCS.

In one embodiment, the meaning of the phrase that "a time density of the first reference signal and a time density of the second reference signal are related to whether an MCS of the first signal and an MCS of the second signal are the same" comprises: when an MCS of the first signal is the same as an MCS of the second signal, a time density of the first reference signal is the same as a time density of the second reference signal; when an MCS of the first signal is different from an MCS of the second signal, a time density of the first reference signal is the same as or different from a time density of the second reference signal.

In one embodiment, the meaning of the phrase that "a time density of the first reference signal and a time density of the second reference signal are related to whether an MCS of the first signal and an MCS of the second signal are the same" comprises: when an MCS of the first signal is the same as an MCS of the second signal, a time density of the first reference signal is the same as a time density of the second reference signal; when an MCS of the first signal is different from an MCS of the second signal, a time density of the first reference signal is different from a time density of the second reference signal.

In one embodiment, the meaning of the phrase that "a time density of the first reference signal and a time density of the second reference signal are related to whether an MCS of the first signal and an MCS of the second signal are the same" comprises: when an MCS of the first signal is the same as an MCS of the second signal, a time density of the first reference signal is the same as a time density of the second reference signal;

when an MCS of the first signal and an MCS of the second signal are different, an MCS of the first signal is used to determine a time density of the first reference signal, and an MCS of the second signal is used to determine a time density of the second reference signal.

**Embodiment 2**

Embodiment 2 illustrates a schematic diagram of a network architecture according to one embodiment of the present application, as shown in FIG. 2.

FIG. 2 is a diagram illustrating a network architecture 200 of Long-Term Evolution (LTE), Long-Term Evolution Advanced (LTE-A) and future 5G systems. The LTE, LTE-A and future 5G systems network architecture 200 may be called an Evolved Packet System (EPS) 200. The 5G NR or LTE network architecture 200 may be called a 5G System (5GS)/Evolved Packet System (EPS) 200 or other appropriate terms. The 5GS/ EPS 200 may comprise one or more UEs 201, a UE 241 that is in Sidelink communications with a UE 201, an NG-RAN 202, a 5G-Core Network/Evolved Packet Core (5GC/ EPC) 210, a Home Subscriber Server (HSS)/ Unified Data Management (UDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will find it easy to understand that various concepts presented throughout the present application can be extended to networks providing circuit switching services. The NG-RAN 202 comprises an NR node B (gNB) 203 and other gNBs 204. The gNB 203 provides UE 201-oriented user plane and control plane protocol terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the 5GC/EPC 210 for the UE 201. Examples of the UE 201 include cellular phones, smart phones, Session Initiation Protocol (SIP) phones, laptop computers, Personal Digital Assistant (PDA), Satellite Radios, Global Positioning Systems (GPSs), multimedia devices, video devices, digital audio players (for example, MP3 players), cameras, game consoles, unmanned aerial vehicles (UAV), aircrafts, narrow-band physical network devices, machine-type communication devices, land vehicles, automobiles, wearable devices, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/ AMFs/ SMFs 214, a Service Gateway (S-GW)/ User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212, the S-GW/UPF 212 is connected to the P-GW/UPF 213. The P-GW provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Services.

In one embodiment, the first node in the present application comprises the UE 201.

In one embodiment, the second node in the present application comprises the gNB 203.

## Embodiment 3

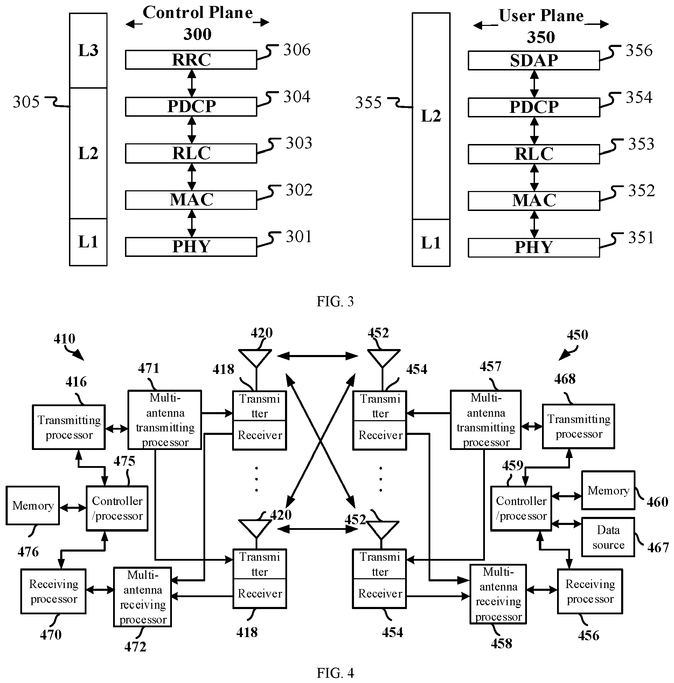

Embodiment 3 illustrates a schematic diagram of a radio protocol architecture of a user plane and a control plane according to one embodiment of the present application, as shown in FIG. 3.

Embodiment 3 illustrates a schematic diagram of an example of a radio protocol architecture of a user plane and a control plane according to one embodiment of the present application, as shown in FIG. 3. FIG. 3 is a schematic diagram illustrating an embodiment of a radio protocol architecture of a user plane 350 and a control plane 300. In FIG. 3, the radio protocol architecture for a first communication node (UE, gNB or an RSU in V2X) and a second communication node (gNB, UE or an RSU in V2X), or between two UEs is represented by three layers, which are a layer 1, a layer 2 and a layer 3, respectively. The layer 1 (L1) is the lowest layer and performs signal processing functions of various PHY layers. The L1 is called PHY 301 in the present application. The layer 2 (L2) 305 is above the PHY 301, and is in charge of a link between a first communication node and a second communication node, or between two UEs. L2 305 comprises a Medium Access Control (MAC) sublayer 302, a Radio Link Control (RLC) sublayer 303 and a Packet Data Convergence Protocol (PDCP) sublayer 304. All the three sublayers terminate at the second communication node. The PDCP sublayer 304 provides multiplexing among variable radio bearers and logical channels. The PDCP sublayer 304 provides security by encrypting a packet and provides support for a first communication node handover between second communication nodes. The RLC sublayer 303 provides segmentation and reassembling of a higher-layer packet, retransmission of a lost packet, and reordering of a data packet so as to compensate the disordered receiving caused by HARQ. The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. The Radio Resource Control (RRC) sublayer 306 in layer 3 (L3) of the control plane 300 is responsible for acquiring radio resources (i.e., radio bearer) and configuring the lower layer with an RRC signaling between a second communication node and a first communication node device. The radio protocol architecture of the user plane 350 comprises layer 1 (L1) and layer 2 (L2). In the user plane 350, the radio protocol architecture for the first communication node and the second communication node is almost the same as the corresponding layer and sublayer in the control plane 300 for physical layer 351, PDCP sublayer 354, RLC sublayer 353 and MAC sublayer 352 in L2 layer 355, but the PDCP sublayer 354 also provides a header compression for a higher-layer packet so as to reduce a radio transmission overhead. The L2 layer 355 in the user plane 350 also includes Service Data Adaptation Protocol (SDAP) sublayer 356, which is responsible for the mapping between QoS flow and Data Radio Bearer (DRB) to support the diversity of traffic. Although not described in FIG. 3, the first communication node may comprise several higher layers above the L2 layer 355, such as a network layer (e.g., IP layer) terminated at a P-GW of the network side and an application layer terminated at the other side of the connection (e.g., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first signaling is generated at the PHY 301 or the PHY 351.

In one embodiment, the first signal is generated at the PHY 301 or the PHY 351.

In one embodiment, the second signal is generated at the PHY 301 or the PHY 351.

In one embodiment, the first reference signal is generated at the PHY 301 or the PHY 351.

In one embodiment, the second reference signal is generated at the PHY 301 or the PHY 351.

In one embodiment, the first demodulation reference signal and the second demodulation reference signal are generated at the PHY 301, or the PHY 351.

## Embodiment 4

Embodiment 4 illustrates a schematic diagram of a first communication device and a second communication device according to one embodiment of the present application, as shown in FIG. 4. FIG. 4 is a block diagram of a first communication device 410 in communication with a second communication device 450 in an access network.

The first communication device 410 comprises a controller/ processor 475, a memory 476, a receiving processor 470, a transmitting processor 416, a multi-antenna receiving processor 472, a multi-antenna transmitting processor 471, a transmitter/ receiver 418 and an antenna 420.

The second communication device 450 comprises a controller/ processor 459, a memory 460, a data source 467, a transmitting processor 468, a receiving processor 456, a multi-antenna transmitting processor 457, a multi-antenna receiving processor 458, a transmitter/receiver 454 and an antenna 452.

In a transmission from the first communication device 410 to the second communication device 450, at the first communication device 410, a higher layer packet from the core network is provided to a controller/ processor 475. The controller/processor 475 provides a function of the L2 layer. In DL transmission, the controller/processor 475 provides header compression, encryption, packet segmentation and reordering, and multiplexing between a logical channel and a transport channel, and radio resource allocation for the second communication device 450 based on various priorities. The controller/processor 475 is also in charge of HARQ operation, retransmission of a lost packet, and a signaling to the second communication node 450. The transmitting processor 416 and the multi-antenna transmitting processor 471 perform various signal processing functions used for the L1 layer (that is, PHY). The transmitting processor 416 performs coding and interleaving so as to ensure an FEC (Forward Error Correction) at the second communication device 450, and the mapping to signal clusters corresponding to each modulation scheme (i.e., BPSK, QPSK, M-PSK, M-QAM, etc.). The multi-antenna transmitting processor 471 performs digital spatial precoding, including codebook-based precoding and noncodebook-based precoding, and beamforming on encoded and modulated symbols to generate one or more parallel streams. The transmitting processor 416 then maps each parallel stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream. Each radio frequency stream is later provided to different antennas 420.

In a transmission from the first communication device 410 to the second communication device 450, at the second communication device 450, each receiver 454 receives a signal via a corresponding antenna 452. Each receiver 454 recovers information modulated to the RF carrier, converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs receiving analog precoding/beamforming on a baseband multicarrier symbol stream from the receiver 454. The receiving processor 456 converts the baseband multicarrier symbol stream after receiving the analog precoding/beamforming from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any second communication device 450-targeted parallel stream. Symbols on each parallel stream are demodulated and recovered in the receiving processor 456 to generate a soft decision. Then the receiving processor 456 decodes and de-interleaves the soft decision to recover the higher-layer data and control signal transmitted on the physical channel by the first communication node 410. Next, the higher-layer data and control signal are provided to the controller/processor 459. The controller/processor 459 performs functions of the L2 layer. The controller/processor 459 can be connected to a memory 460 that stores program code and data. The memory 460 can be called a computer readable medium. In downlink (DL) transmission, the controller/processor 459 provides demultiplexing between a transport channel and a logical channel, packet reassembling, decryption, header decompression and control signal processing so as to recover a higher-layer packet from the core network. The higher-layer packet is later provided to all protocol layers above the L2 layer, or various control signals can be provided to the L3 layer for processing. The controller/processor 459 also performs error detection using ACK and/or NACK protocols as a way to support HARQ operation.

In a transmission from the second communication device 450 to the first communication device 410, at the second communication device 450, the data source 467 is configured to provide a higher-layer packet to the controller/processor 459. The data source 467 represents all protocol layers above the L2 layer. Similar to a transmitting function of the first communication device 410 described in DL transmission, the controller/processor 459 performs header compression, encryption, packet segmentation and reordering, and multiplexing between a logical channel and a transport channel based on radio resource allocation of the first communication device 410 so as to provide the L2 layer functions used for the user plane and the control plane. The controller/processor 459 is also responsible for HARQ operation, retransmission of a lost packet, and a signaling to the first communication device 410. The transmitting processor 468 performs modulation mapping and channel coding. The multi-antenna transmitting processor 457 implements digital multi-antenna spatial precoding, including codebook-based precoding and non-codebook-based precoding, as well as beamforming. Following that, the generated parallel streams are modulated into multicarrier/single-carrier symbol streams by the transmitting processor 468, and then modulated symbol streams are subjected to analog precoding/beamforming in the multi-antenna transmitting processor 457 and provided from the transmitters 454 to each antenna 452. Each transmitter 454 first converts a baseband symbol stream provided by the multi-antenna transmitting processor 457 into a radio frequency symbol stream, and then provides the radio frequency symbol stream to the antenna 452.

In the transmission from the second communication device 450 to the first communication device 410, the function of the first communication device 410 is similar to the receiving function of the second communication device 450 described in the transmission from the first communication device 410 to the second communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and multi-antenna receiving processor 472 collectively provide functions of the L1 layer. The controller/processor 475 provides functions of the L2 layer. The controller/processor 475 can be connected with the memory 476 that stores program code and data. The memory 476 can be called a computer readable medium. the controller/processor 475 provides de-multiplexing between a transport channel and a logical channel, packet reassembling, decryption, header decompression, control signal processing so as to recover a higher-layer packet from the second communication device 450. The higher-layer packet coming from the controller/processor 475 may be provided to the core network. The controller/processor 475 can also perform error detection using ACK and/or NACK protocols to support HARQ operation.

In one embodiment, the second communication device 450 comprises at least one processor and at least one memory. The at least one memory comprises computer program codes; the at least one memory and the computer program codes are configured to be used in collaboration with the at least one processor. The second communication device 450 at least: receives a first signaling; transmits a first signal, a second signal, a first reference signal, and a second reference signal in a target time-frequency resource block; herein, the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB.

In one embodiment, the second communication device 450 comprises a memory that stores a computer readable instruction program. The computer readable instruction program generates an action when executed by at least one processor. The action includes: receiving a first signaling; transmitting a first signal, a second signal, a first reference signal, and a second reference signal in a target time-frequency resource block; herein, the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB.

In one embodiment, the first communication device 410 comprises at least one processor and at least one memory. The at least one memory comprises computer program codes; the at least one memory and the computer program codes are configured to be used in collaboration with the at least one processor. The first communication device 410 at least: transmits a first signaling; receives a first signal, a second signal, a first reference signal, and a second reference signal in a target time-frequency resource block; herein, the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB.

In one embodiment, the first communication device 410 comprises a memory that stores a computer readable instruction program. The computer readable instruction program generates an action when executed by at least one processor. The action includes: transmitting a first signaling; receiving a first signal, a second signal, a first reference signal, and a second reference signal in a target time-frequency resource block; herein, the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB.

In one embodiment, the first node comprises the second communication device 450 in the present application.

In one embodiment, the second node in the present application comprises the first communication device 410.

In one embodiment, at least one of the antenna 452, the receiver 454, the receiving processor 456, the multi-antenna receiving processor 458, the controller/processor 459, the memory 460, or the data source 467 is used to receive the first signaling in the present application; at least one of the antenna 420, the transmitter 418, the transmitting processor 416, the multi-antenna transmitting processor 471, the controller/processor 475, or the memory 476 is used to transmit the first signaling in the present application.

In one embodiment, at least one of the antenna 452, the transmitter 454, the transmitting processor 468, the multi-antenna transmitting processor 457, the controller/processor 459, or the memory 460 is used to transmit the first signal, the second signal, the first reference signal and the second reference signal in the present application; at least one of the antenna 420, the receiver 418, the receiving processor 470, the multi-antenna receiving processor 472, the controller/ processor 475, or the memory 476 is used to receive the first signal, the second signal, the first reference signal and the second reference signal in the target time-frequency resource block in the present application.

In one embodiment, at least one of the antenna 452, the transmitter 454, the transmitting processor 468, the multi-antenna transmitting processor 457, the controller/processor 459, or the memory 460 is used to transmit the first demodulation reference signal and the second demodulation reference signal in the target time-frequency resource block in the present application; at least one of the antenna 420, the receiver 418, the receiving processor 470, the multi-antenna receiving processor 472, the controller/ processor 475, or the memory 476 is used to receive the first demodulation reference signal and the second demodulation reference signal in the target time-frequency resource block in the present application.

**Embodiment 5**

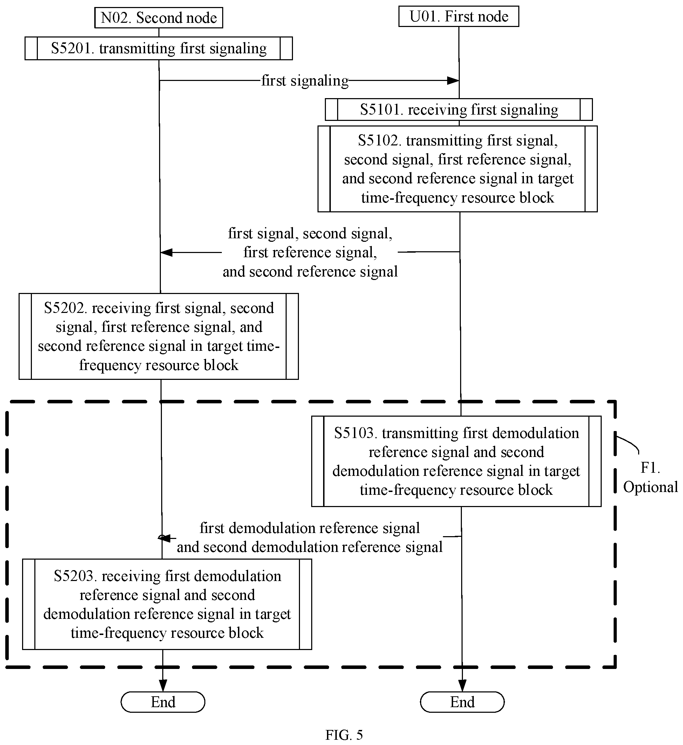

Embodiment 5 illustrates a flowchart of wireless transmission according to one embodiment in the present application, as shown in FIG. 5. In FIG. 5, a first node U01 and a second node N02 are respectively communication nodes transmitted via an air interface; in FIG. 5, steps in box F1 are optional.

**The first node U01** receives a first signaling in step S5101; transmits a first signal, a second signal, a first reference signal and a second reference signal in a target time-frequency resource block in step S5102; transmits a first demodulation reference signal and a second demodulation reference signal in a target time-frequency resource block in step S5103;

**The second node N02** transmits a first signaling in step S5201; receives a first signal, a second signal, a first reference signal, and a second reference signal in a target time-frequency resource block in step S5202; receives a first demodulation reference signal and a second demodulation reference signal in a target time-frequency resource block in step S5203.

In embodiment 5, the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB; antenna port(s) of the first reference signal is(are) associated with antenna port(s) of the first demodulation reference signal; antenna port(s) of the second reference signal is(are) associated with antenna port(s) of the second demodulation reference signal.

In one embodiment, the meaning of the phrase that "the target MCS is used to determine a target time density" comprises: obtaining a target time density by looking up the table according to the target MCS; the meaning of the phrase that "the first MCS is used to determine a time density of the first reference signal" comprises: obtaining a time density of the first reference signal by looking up the table according to the first MCS; the meaning of the phrase that "the second MCS is used to determine a time density of the second reference signal" comprises: obtaining a time density of the second reference signal by looking up the table according to the second MCS; the meaning of the phrase that "an MCS of the first signal is used to determine a time density of the first reference signal" comprises: obtaining a time density of the first reference signal by looking up the table according to an MCS of the first signal; the meaning of the phrase that "an MCS of the second signal is used to determine a time density of the second reference signal" comprises: obtaining a time density of the second reference signal by looking up the table according to an MCS of the second signal; the meaning of the phrase that "the first MCS is used to determine a first time density" comprises: obtaining a first time density by looking up the table according to the first MCS; the meaning of the phrase that "the second MCS is used to determine a second time density" comprises: obtaining a second time density by looking up the table according to the second MCS.

In one embodiment, the meaning of the phrase that "the target MCS is used to determine a target time density" comprises: obtaining a target time density through functional operation according to the target MCS; the meaning of the phrase that "the first MCS is used to determine a time density of the first reference signal" comprises: obtaining a time density of the first reference signal through functional operation according to the first MCS; the meaning of the phrase that "the second MCS is used to determine a time density of the second reference signal" comprises: obtaining a time density of the second reference signal through functional operation according to the second MCS; the meaning of the phrase that "an MCS of the first signal is used to determine a time density of the first reference signal" comprises: obtaining a time density of the first reference signal through functional operation according to an MCS of the first signal; the meaning of the phrase that "an MCS of the second signal is used to determine a time density of the second reference signal" comprises: obtaining a time density of the second reference signal through functional operation according to an MCS of the second signal; the meaning of the phrase that "the first MCS is used to determine a first time density" comprises: obtaining a first time density through functional operation according to the first MCS; the meaning of the phrase that "the second MCS is used to determine a second time density" comprises: obtaining a second time density through functional operation according to the second MCS.

In one embodiment, the meaning of the phrase that "the target MCS is used to determine a target time density" comprises: obtaining a target time density through a mapping relation according to the target MCS; the meaning of the phrase that "the first MCS is used to determine a time density of the first reference signal" comprises: obtaining a time density of the first reference signal through a mapping relation according to the first MCS; the meaning of the phrase that "the second MCS is used to determine a time density of the second reference signal" comprises: obtaining a time density of the second reference signal through a mapping relation according to the second MCS; the meaning of the phrase that "an MCS of the first signal is used to determine a time density of the first reference signal" comprises: obtaining a time density of the first reference signal through a mapping relation according to an MCS of the first signal; the meaning of the phrase that "an MCS of the second signal is used to determine a time density of the second reference signal" comprises: obtaining a time density of the second reference signal through a mapping relation according to an MCS of the second signal; the meaning of the phrase that "the first MCS is used to determine a first time density" comprises: obtaining a first time density through a mapping relation according to the first MCS; the meaning of the phrase that "the second MCS is used to determine a second time density" comprises: obtaining a second time density through a mapping relation according to the second MCS.

In one embodiment, the meaning of the phrase that "the target MCS is used to determine a target time density" comprises: N MCS sets respectively correspond to N time densities, N being a positive integer greater than 1; one MCS set of the target MCS in the N MCS sets corresponds to the target time density, and the target time density is one of the N time densities.

In one embodiment, the meaning of the phrase that "the first MCS is used to determine a time density of the first reference signal" comprises: N1 MCS sets respectively correspond to N1 time densities, where N1 is a positive integer greater than 1; one MCS set of the first MCS in the N1 MCS sets corresponds to a time density of the first reference signal, and a time density of the first reference signal is one of the N1 time densities; the meaning of the phrase that "the second MCS is used to determine a time density of the second reference signal" comprises: N2 MCS sets respectively correspond to N2 time densities, where N2 is a positive integer greater than 1; one MCS set of the second MCS in the N2 MCS sets corresponds to a time density of the second reference signal, and a time density of the second reference signal is one of the N2 time densities.

In one embodiment, the meaning of the phrase that "an MCS of the first signal is used to determine a time density of the first reference signal" comprises: N1 MCS sets respectively correspond to N1 time densities, where N1 is a positive integer greater than 1; an MCS set comprising MCSs of the first signal among the N1 MCS sets corresponds to a time density of the first reference signal, and a time density of the first reference signal is one of the N1 time densities; the meaning of the phrase that "an MCS of the second signal is used to determine a time density of the second reference signal" comprises: N2 MCS sets respectively correspond to N2 time densities, where N2 is a positive integer greater than 1; an MCS set comprising MCSs of the second signal among the N2 MCS sets corresponds to a time density of the second reference signal, and a time density of the second reference signal is one of the N2 time densities.

In one embodiment, the meaning of the phrase that "the first MCS is used to determine a first time density" comprises: N1 MCS sets respectively correspond to N1 time densities, where N1 is a positive integer greater than 1; an MCS set comprising the first MCS among the N1 MCS sets corresponds to the first time density, and the first time density is one of the N1 time densities; the meaning of the phrase that "the second MCS is used to determine a second time density" comprises: N2 MCS sets respectively correspond to N2 time densities, where N2 is a positive integer greater than 1; an MCS set comprising the second MCS among the N2 MCS sets corresponds to the second time density, and the second time density is one of the N2 time densities.

In one embodiment, N, N1, and N2 are all the same.

In one embodiment, at least two of N, N1, and N2 are different.

In one embodiment, measurements for the first demodulation reference signal and the second demodulation reference signal are used for demodulations of the first signal and the second signal.

In one embodiment, a channel estimated by measurements for the first demodulation reference signal and the second demodulation reference signal is used for demodulations of the first signal and the second signal.

In one embodiment, a measurement performed on the first demodulation reference signal is used for a demodulation of the first signal, a measurement performed on the second demodulation reference signal is used for a demodulation of the second signal.

In one embodiment, a measurement on at least the first demodulation reference signal in the first demodulation reference signal or the second demodulation reference signal is used for a demodulation of the first signal, and a measurement on at least the second demodulation reference signal in the first demodulation reference signal or the second demodulation reference signal is used for a demodulation of the second signal.

In one embodiment, a channel estimated by a measurement performed on the first demodulation reference signal is used for a demodulation of the first signal, and a channel estimated by a measurement performed on the second demodulation reference signal is used for a demodulation of the second signal.

In one embodiment, the first demodulation reference signal comprises DMRS (Demodulation Reference Signals) of the first signal, and the second demodulation reference signal comprises DMRS of the second signal.

In one embodiment, the first reference signal resource group is used to determine antenna port(s) of the first demodulation reference signal after precoding, and the second reference signal resource group is used to determine antenna port(s) of the second demodulation reference signal after precoding.

In one embodiment, antenna port(s) of the first reference signal resource group is(are) used to transmit the first demodulation reference signal, and antenna port(s) of the second reference signal resource group is(are) used to transmit the second demodulation reference signal.

In one embodiment, the antenna port(s) for transmitting the first signal is(are) the same as pre-coded antenna port(s) of the first demodulation reference signal, and the antenna port(s) for transmitting the second signal is(are) the same as pre-coded antenna port(s) of the second demodulation reference signal.

In one embodiment, the antenna port(s) for transmitting the first signal is(are) used to transmit the first demodulation reference signal, and the antenna port(s) for transmitting the second signal is(are) used to transmit the second demodulation reference signal.

In one embodiment, the first signaling indicates antenna port(s) of the first reference signal is(are) associated with which antenna port of the first demodulation reference signal, and antenna port(s) of the second demodulation reference signal is(are) associated with which antenna port of the second demodulation reference signal.

In one embodiment, the first signaling indicates antenna port(s) of the first reference signal is(are) associated with which antenna port of the first demodulation reference signal.

In one embodiment, the first signaling comprises a fifth field, the fifth field comprised in the first signaling indicates antenna port(s) of the first reference signal is(are) associated with which antenna port of the first demodulation reference signal; the fifth field comprises at least one bit.

In one embodiment, the first signaling comprises a fifth field, the fifth field comprised in the first signaling indicates antenna port(s) of the first reference signal is(are) associated with which antenna port of the first demodulation reference signal, and antenna port(s) of the second demodulation reference signal is(are) associated with which antenna port of the second demodulation reference signal; the fifth field comprises at least one bit.

In one embodiment, the first signaling comprises a fifth field and a sixth field, the fifth field comprised in the first signaling indicates antenna port(s) of the first reference signal is(are) associated with which antenna port of the first demodulation reference signal, and the sixth field comprised in the first signaling indicates antenna port(s) of the second reference signal is associated with which antenna port of the second demodulation reference signal; the fifth field comprises at least one bit, and the sixth field comprises at least one bit.

In one embodiment, the fifth field is a PTRS-DMRS association field.

In one embodiment, the fifth sixth is a PTRS-DMRS association field.

In one embodiment, for the specific meaning of the PTRS-DMRS association field, refer to chapter 7.3 in 3GPP TS38. 212.

In one embodiment, the meaning of the phrase that "antenna port(s) of the first reference signal is(are) associated with an antenna port of the first demodulation reference signal" comprises: frequency-domain resources occupied by the first reference signal belong to frequency-domain resources occupied by an antenna port of the first demodulation reference signal; the meaning of the phrase that "antenna port(s) of the second reference signal is(are) associated with an antenna port of the second demodulation reference signal" comprises: frequency-domain resources occupied by the second reference signal belong to frequency-domain resources occupied by an antenna port of the second demodulation reference signal.

In one embodiment, the meaning of the phrase that "antenna port(s) of the first reference signal is(are) associated with an antenna port of the first demodulation reference signal" comprises: subcarrier(s) occupied by the first reference signal belongs(belong) to subcarrier(s) occupied by an antenna port of the first demodulation reference signal; the meaning of the phrase that "antenna port(s) of the second reference signal is(are) associated with an antenna port of the second demodulation reference signal" comprises: subcarrier(s) occupied by the second reference signal belongs(belong) to subcarrier(s) occupied by an antenna port of the second demodulation reference signal.

In one embodiment, the meaning of the phrase that "antenna port(s) of the first reference signal is(are) associated with an antenna port of the first demodulation reference signal" comprises: antenna port(s) of the first reference signal is(are) used for compensating phase noise of the first demodulation reference signal; the meaning of the phrase that "antenna port(s) of the second reference signal is(are) associated with an antenna port of the second demodulation reference signal" comprises: antenna port(s) of the second reference signal is(are) used for compensating phase noise of the second demodulation reference signal.

In one embodiment, the meaning of the phrase that "antenna port(s) of the first reference signal is(are) associated with an antenna port of the first demodulation reference signal" comprises: antenna port(s) of the first reference signal is used for compensating phase noise of the first signal; the meaning of the phrase that "antenna port(s) of the second reference signal is(are) associated with an antenna port of the second demodulation reference signal" comprises: an antenna port of the second reference signal is used for compensating phase noise of the second signal.

In one embodiment, the meaning of the phrase that "antenna port(s) of the first reference signal is(are) associated with an antenna port of the first demodulation reference signal" comprises: antenna port(s) of the first reference signal after precoding is(are) the same as antenna port(s) of the first demodulation reference signal after precoding; the meaning of the phrase that "antenna port(s) of the second reference signal is(are) associated with an antenna port of the second demodulation reference signal" comprises: antenna port(s) of the second reference signal after precoding is(are) the same as antenna port(s) of the second demodulation reference signal after precoding.

In one embodiment, the meaning of the phrase that "antenna port(s) of the first reference signal is(are) associated with an antenna port of the first demodulation reference signal" comprises: the first reference signal and the first demodulation reference signal have same precoding; the meaning of the phrase that "antenna port(s) of the second reference signal is(are) associated with an antenna port of the second demodulation reference signal" comprises: the first reference signal and the second demodulation reference signal have same precoding.

In one embodiment, the meaning of the phrase that "antenna port(s) of the first reference signal is(are) associated with an antenna port of the first demodulation reference signal" comprises: small-scale channel fading parameters to which an antenna port of the first demodulation reference signal is conveyed can be used to infer small-scale channel fading parameters to which antenna port(s) of the first reference signal is(are) conveyed; the meaning of the phrase that "antenna port(s) of the second reference signal is(are) associated with an antenna port of the second demodulation reference signal" comprises: small-scale channel fading parameters to which an antenna port of the second demodulation reference signal is conveyed can be used to infer small-scale channel fading parameters to which antenna port(s) of the second reference signal is(are) conveyed.

## Embodiment 6

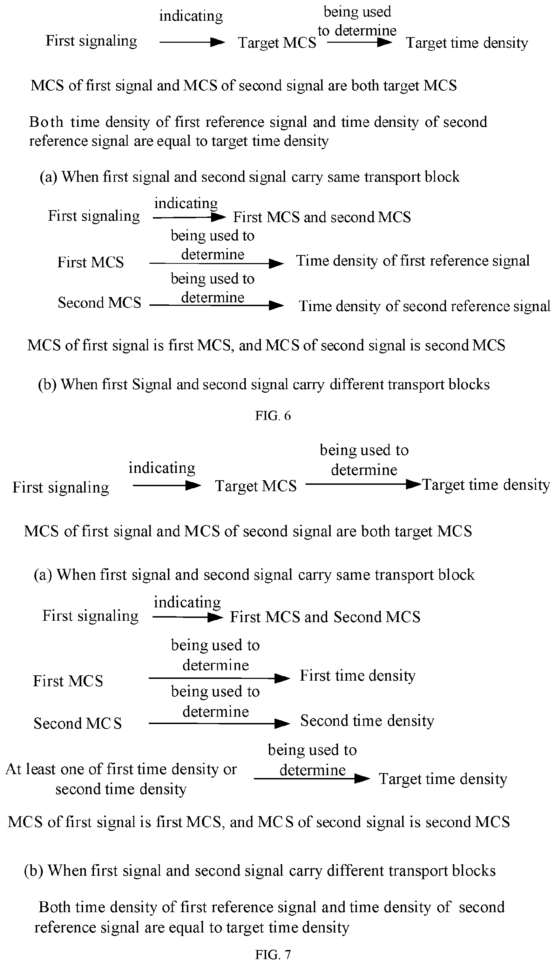

Embodiment 6 illustrates a schematic diagram of a time density of the first reference signal and a time density of the second reference signal being related to whether the first signal and the second signal carry a same TB according to one embodiment of the present application, as shown in FIG. 6.

In embodiment 6, when the first signal and the second signal carry a same TB, the first signaling indicates a target MCS, both an MCS of the first signal and an MCS of the second signal are the target MCS, the target MCS is used to determine a target time density, and a time density of the first reference signal and a time density of the second reference signal are equal to the target time density; when the first signal and the second signal carry different TBs, the first signaling indicates a first MCS and a second MCS, an MCS of the first signal is the first MCS, an MCS of the second signal is the second MCS, the first MCS is used to determine a time density of the first reference signal, and the second MCS is used to determine a time density of the second reference signal.

In one embodiment, time-frequency resources occupied by the first signal comprise part or all of time-frequency resources occupied by the second reference signal.

In one embodiment, time-frequency resources occupied by the second signal comprise part or all of time-frequency resources occupied by the first reference signal.

In one embodiment, time-frequency resources occupied by the first signal comprise part or all of time-frequency resources occupied by the second reference signal, and time-frequency resources occupied by the second signal comprise part or all of time-frequency resources occupied by the first reference signal.

In one embodiment, time-frequency resources occupied by the first signal are orthogonal to time-frequency resources occupied by the second reference signal.

In one embodiment, time-frequency resources occupied by the second signal are orthogonal to time-frequency resources occupied by the first reference signal.

In one embodiment, time-frequency resources occupied by the first signal are orthogonal to time-frequency resources occupied by the second reference signal, and time-frequency resources occupied by the second signal are orthogonal to time-frequency resources occupied by the first reference signal.

In one embodiment, the first signaling indicates an index of the target MCS.

In one embodiment, the first signal comprises a seventh field, and the seventh field in the first signal indicates a target MCS; the seventh field comprises at least one bit.

In one embodiment, the seventh field comprises 5 bits.

In one embodiment, the seventh field is a Modulation and coding scheme field.

In one embodiment, for the specific definition of the Modulation and coding scheme field, refer to chapter 7.3 in 3GPP TS38.212.

Typically, the MCS comprises modulation order and target code rate.

Typically, the MCS comprises modulation order, target code rate and spectral efficiency.

In one embodiment, the first signaling indicates an index of the first MCS and an index of the second MCS.

In one embodiment, the first signal comprises a seventh field and an eighth field, where the seventh field in the first signal indicates a first MCS, and the eighth field in the first signal indicates a second MCS; the seventh field comprises at least one bit, and the eighth field comprises at least one bit.

In one embodiment, the seventh field comprises 5 bits.

In one embodiment, the eighth field comprises 5 bits.

In one embodiment, the seventh field is a Modulation and coding scheme field, and the eighth field is a Modulation and coding scheme field.

**Embodiment 7**

Embodiment 7 illustrates a schematic diagram of a time density of the first reference signal and a time density of the second reference signal being related to whether the first signal and the second signal carry a same TB according to another embodiment of the present application, as shown in FIG. 7.

In embodiment 7, both a time density of the first reference signal and a time density of the second reference signal are equal to a target time density; when the first signal and the second signal carry a same TB, the first signaling indicates a target MCS, both an MCS of the first signal and an MCS of the second signal are the target MCS, and the target MCS is used to determine the target time density; when the first signal and the second signal carry different TBs, the first signaling indicates a first MCS and a second MCS, an MCS of the first signal is the first MCS, an MCS of the second signal is the second MCS, the first MCS is used to determine a first time density, the second MCS is used to determine a second time density, and at least one of the first time density or the second time density is used to determine the target time density.

In one embodiment, the first time density is a positive integer, and the second time density is a positive integer.

In one embodiment, the meaning of the phrase that "at least one of the first time density or the second time density is used to determine the target time density" comprises: the first time density or the second time density is used to determine the target time density.

In one embodiment, the meaning of the phrase that "at least one of the first time density or the second time density is used to determine the target time density" comprises: the target time density is either the first time density or the second time density.

In one embodiment, the meaning of the phrase that "at least one of the first time density or the second time density is used to determine the target time density" comprises: a size relation between the first time density and the second time density is used to determine the target time density.

In one embodiment, the meaning of the phrase that "at least one of the first time density or the second time density is used to determine the target time density" comprises: the target time density is a smaller one of the first time density and the second time density.

In one subembodiment of the above embodiment, when the first time density and the second time density are the same, the target time density is the first time density.

In one subembodiment of the above embodiment, when the first time density is less than the second time density, the target time density is the first time density.

In one subembodiment of the above embodiment, when the first time density is greater than the second time density, the target time density is the second time density.

In one embodiment, the meaning of the phrase that "at least one of the first time density or the second time density is used to determine the target time density" comprises: when the first time density and the second time density are the same, the target time density is equal to the first time density; when the first time density and the second time density are different, the target time density is equal to a reference time density.

In one subembodiment of the above embodiment, the reference time density is a positive integer.

In one subembodiment of the above embodiment, the reference time density is 1.

In one subembodiment of the above embodiment, the reference time density is not greater than the first time density and the second time density.

In one subembodiment of the above embodiment, the reference time density is predefined.

In one subembodiment of the above embodiment, the reference time density is fixed.

In one subembodiment of the above embodiment, the reference time density is configurable.

In one embodiment, the meaning of the phrase that "at least one of the first time density or the second time density is used to determine the target time density" comprises: the first time density and the second time density are used together to determine the target time density.

In one embodiment, the meaning of the phrase that "the first time density and the second time density are used together to determine the target time density" comprises: a size relation between the first time density and the second time density is used to determine the target time density.

In one embodiment, the meaning of the phrase that "the first time density and the second time density are used together to determine the target time density" comprises: the target time density is a smaller one of the first time density and the second time density.

In one embodiment, the meaning of the phrase that "the first time density and the second time density are used together to determine the target time density" comprises: the target time density is obtained by looking up a table according to the first time density and the second time density.

In one embodiment, the meaning of the phrase that "the first time density and the second time density are used together to determine the target time density" comprises: the target time density is obtained by functional operation according to the first time density and the second time density.

In one embodiment, the meaning of the phrase that "the first time density and the second time density are used together to determine the target time density" comprises: the target time density is obtained through mapping relation according to the first time density and the second time density.

In one embodiment, the functional operation is a linear transformation.

In one embodiment, the functional operation is a non-linear transformation.

## Embodiment 8

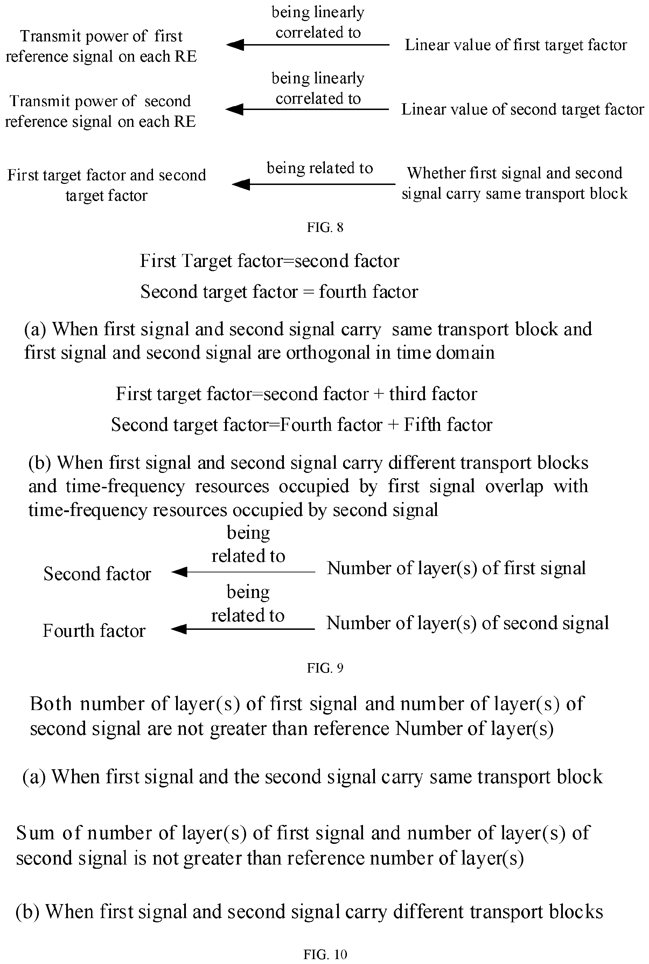

Embodiment 8 illustrates a schematic diagram of transmit power of the first reference signal per RE and transmit power of the second reference signal per RE according to one embodiment of the present application, as shown in FIG. 8.

In embodiment 8, transmit power of the first reference signal per RE is linearly correlated with a linear value of a first target factor, and transmit power of the second reference signal per RE is linearly correlated with a linear value of a second target factor; the first target factor and the second target factor are related to whether the first signal and the second signal carry a same TB.

Typically, the first target factor is a positive real number, and the second target factor is a positive real number.

Typically, the first target factor is measured by dB, and the second target factor is measured by dB.

Typically, the first target factor is equal to a base 10 logarithm of a linear value of the first target factor then multiplied by 10, and the second target factor is equal to a base 10 logarithm of a linear value of the second target factor then multiplied by 10.

Typically, a linear value of the first target factor is c, and the first target factor is $10 \log_{10} c$.

Typically, a linear value of the second target factor is c, and the second target factor is $10 \log_{10} c$.

Typically, the first target factor is $\alpha$, and a linear value of the first target factor is $10^{\frac{\alpha}{10}}$.

Typically, the second target factor is $\alpha$, and a linear value of the second target factor is $10^{\frac{\alpha}{10}}$.

In one embodiment, the first target factor is $\alpha_{PTRS}^{PUSCH}$.

In one embodiment, the second target factor is $\alpha_{PTRS}^{PUSCH}$.

In one embodiment, for the specific meaning of the $\alpha_{PTRS}^{PUSCH}$, refer to section 6 in 3GPP TS38. 214.

Typically, a unit for measurement of the transmit power of the first reference signal per RE is mW (milliwatt), and a unit for measurement of the transmit power of the second reference signal per RE is mW (milliwatt).

In one embodiment, transmit power of the first reference signal per RE is equal to a product of a linear value of first reference power and the first target factor, and the transmit power of the second reference signal per RE is equal to a product of a linear value of second reference power and the first target factor.

In one embodiment, the first reference power is transmit power of the first signal per RE per layer, and the second reference power is transmit power of the second signal per RE per layer.

In one embodiment, the first reference power is transmit power of each RE of each antenna port of the first demodulation reference signal, and the second reference power is the transmit power of each RE of each antenna port of the second demodulation reference signal.

In one embodiment, the first reference power is predefined or configurable, and the second reference power is predefined or configurable.

In one embodiment, a unit for measurement of the first reference power is mW, and a unit for measurement of the second reference power is mW.

In one embodiment, a ratio of transmit power of the first reference signal per RE to transmit power of the first signal per RE per layer is equal to a linear value of a first target factor, and a ratio of transmit power of the second reference signal per RE to transmit power of the second signal per RE per layer is equal to a linear value of a second target factor.

Typically, a unit for measurement of the first signal per RE per layer is mW, and a unit for measurement of the second signal per RE per layer is mW.

Typically, "a ratio of transmit power of the first reference signal per RE to transmit power of the first signal per RE per layer" is a value obtained by transmit power of the first reference signal per RE divided by transmit power of the first signal per RE per layer.

In one embodiment, "transmit power of the first signal per RE per layer" is equal to a value obtained after total transmit power of the first signal divided by a number of layer(s) of the first signal and then divided by a number of RE(s) occupied; "transmit power of the second signal per layer per RE" is equal to a value obtained after total transmit power of the second signal divided by a number of layer(s) of the second signal and then divided by a number of RE(s) occupied.

In one embodiment, "transmit power of the first signal per RE per layer" is equal to a value obtained by dividing transmit power of the first signal per RE by a number of layer(s) of the first signal; "transmit power of the second signal per RE per layer" is equal to a value obtained by dividing transmit power of the second signal per RE by a number of layer(s) of the second signal.

In one embodiment, the meaning of the phrase that "the first target factor and the second target factor are related to whether the first signal and the second signal carry a same TB" comprises: the first target factor and the second target factor are related to whether the first signal and the second signal are space division multiplexing, and whether the first signal and the second signal carry a same TB is related to whether the first signal and the second signal are space division multiplexing.

In one embodiment, the meaning of the phrase that "the first target factor and the second target factor are related to whether the first signal and the second signal carry a same TB" comprises: when the first signal and the second signal are time division multiplexing, the first target factor is equal to a second factor, and the second target factor is equal to a fourth factor; when the first signal and the second signal are space division multiplexing, the first target factor is equal to a sum of a second factor and a third factor, and the second target factor is equal to a sum of a fourth factor and a fifth factor; the second factor is related to a number of layer(s) of the first signal, and the fourth factor is related to a number of layer(s) of the second signal.

In one embodiment, the meaning of the phrase that "the first target factor and the second target factor are related to whether the first signal and the second signal carry a same TB" comprises: the first target factor and the second target factor are related to whether an MCS of the first signal and an MCS of the second signal are the same, and whether an MCS of the first signal and an MCS of the second signal are the same is related to whether the first signal and the second signal carry a same TB.

In one embodiment, the meaning of the phrase that "the first target factor and the second target factor are related to whether the first signal and the second signal carry a same TB" comprises: when an MCS of the first signal and an MCS of the second signal are the same and the first signal and the second signal are orthogonal in time domain, the first target factor is equal to a second factor, and the second target factor is equal to a fourth factor; when the first signaling indicates a first MCS and a second MCS, and time-frequency resources occupied by the first signal overlap with time-frequency resources occupied by the second signal, an MCS of the first signal is the first MCS, an MCS of the second signal is the second MCS, the first target factor is equal to a sum of the second factor and a third factor, and the second target factor is equal to a sum of a fourth factor and a fifth factor; the second factor is related to a number of layer(s) of the first signal, and the fourth factor is related to a number of layer(s) of the second signal.

## Embodiment 9

Embodiment 9 illustrates a schematic diagram of the first target factor and the second target factor being related to whether the first signal and the second signal carry a same TB according to one embodiment of the present application, as shown in FIG. 9.

In embodiment 9, when the first signal and the second signal carry a same TB and the first signal and the second signal are orthogonal in time domain, the first target factor is equal to a second factor, and the second target factor is equal to a fourth factor; when the first signal and the second signal carry different TBs and time-frequency resources occupied by the first signal overlap with time-frequency resources occupied by the second signal, the first target factor is equal to a sum of a second factor and a third factor, and the second target factor is equal to a sum of a fourth factor and a fifth factor; the second factor is related to a number of layer(s) of the first signal, and the fourth factor is related to a number of layer(s) of the second signal.

Typically, the second factor is a positive real number, the third factor is a positive real number, the fourth factor is a positive real number, and the fifth factor is a positive real number.

Typically, a unit for measurement of the second factor is dB, a unit for measurement of the third factor is dB, a unit for measurement of the fourth factor is dB, and a unit for measurement of the fifth factor is dB.

In one embodiment, the meaning of the phrase that "the second factor is related to a number of layer(s) of the first signal" comprises: a linear value of the second factor is equal to a number of layer(s) of the first signal; the meaning of the phrase that "the fourth factor is related to a number of layer(s) of the second signal" comprises: a linear value of the fourth factor is equal to a number of layer(s) of the second signal.

In one embodiment, the second factor is also related to a transmission scheme of the first signal, and the fourth factor is also related to a transmission scheme of the second signal.

In one subembodiment of the above embodiment, the second factor is at least a functional relation with a transmission scheme of the first signal, and the fourth factor is at least a functional relation with a transmission scheme of the second signal.

In one subembodiment of the above embodiment, the second factor is at least a mapping relation with a transmission scheme of the first signal, and the fourth factor is at least a mapping relation with a transmission scheme of the second signal.

In one subembodiment of the above embodiment, the first node obtains the second factor by looking up a table according to at least a transmission scheme of the first signal, and the first node obtains the fourth factor by looking up a table according to at least a transmission scheme of the second signal.

In one embodiment, the meaning of the phrase that "a given factor is related to a number of layer(s) of a given signal" comprises: the given factor is at least a functional relation with a number of layer(s) of the given signal.

In one embodiment, the meaning of the phrase that "a given factor is related to a number of layer(s) of a given signal" comprises: the given factor is at least a mapping relation with a number of layer(s) of the given signal.

In one embodiment, the meaning of the phrase that "a given factor is related to a number of layer(s) of a given signal" comprises: the first node obtains the given factor by looking up a table according to at least a number of layer(s) of the given signal.

In one embodiment, the meaning of the phrase that "a given factor is related to a number of layer(s) of a given signal" comprises: when a number of layer(s) of the given signal is respectively equal to 1, 2, 3, and 4, the given factor is respectively equal to 0, 3, 4.77, and 6.

In one embodiment, the meaning of the phrase that "a given factor is related to a number of layer(s) of a given signal" comprises: a transmission scheme for the given signal is fully coherent codebook based uplink transmission; when a number of layer(s) of the given signal is respectively equal to 1, 2, 3, and 4, the given factor is respectively equal to 0, 3, 4.77, and 6.

In one embodiment, the meaning of the phrase that "a given factor is related to a number of layer(s) of a given signal" comprises: a transmission scheme for the given signal is partial coherent codebook based uplink transmission; when a number of layer(s) of the given signal is respectively equal to 1, 2, 3, and 4, the given factor is respectively equal to 0, $3Q_p$ - 3, $3Q_p$ - 3 and $3Q_p$.

In one embodiment, the meaning of the phrase that "a given factor is related to a number of layer(s) of a given signal" comprises: a transmission scheme for the given signal is either non-coherent codebook-based uplink transmission or non-codebook-based uplink transmission; when a number of layer(s) of the given signal is respectively equal to 1, 2, 3, and 4, the given factor is respectively equal to 0, $3Q_p$ - 3, $3Q_p$ - 3 and $3Q_p$ - 3.

In one embodiment, the meaning of the phrase that "a given factor is related to a number of layer(s) of a given signal" comprises: the given factor is equal to a dB value of a number of layer(s) of the given signal.

In one subembodiment of the above embodiment, a transmission scheme for the given signal is full coherent codebook based uplink transmission.

In one embodiment, the meaning of the phrase that "a given factor is related to a number of layer(s) of a given signal" comprises: the given factor is linearly correlated with a dB value of a number of layer(s) of the given signal.

In one subembodiment of the above embodiment, a transmission scheme for the given signal is fully coherent codebook based uplink transmission.

In one embodiment, the given factor is the second factor, and the given signal is the first signal.

In one embodiment, the given factor is the fourth factor, and the given signal is the second signal.

In one embodiment, P1 is a number of antenna port(s) for the first reference signal, P2 is a number of antenna port(s) for the second reference signal, and P is equal to a sum of P1 and P2; the third factor is related to P and P1, and the fifth factor is related to P and P2.

In one embodiment, P1 is a number of antenna port(s) for the first reference signal, P2 is a number of antenna port(s) for the second reference signal, and P is equal to a sum of P1 and P2; the third factor is related to a ratio of P to P1, and the fifth factor is related to a ratio of P to P2.

In one embodiment, the meaning of the phrase that "the third factor is related to P and P1" comprises: the third factor is related to a ratio of P to P1; the meaning of the phrase that "the fifth factor is related to P and P2" comprises: the fifth factor is related to a ratio of P to P2.

In one embodiment, the meaning of the phrase that "the third factor is related to P and P1" comprises: the third factor is a functional relation with P and P1; the meaning of the phrase that "the fifth factor is related to P and P2" comprises: the fifth factor is a functional relation with P and P2.

In one embodiment, the meaning of the phrase that "the third factor is related to P and P1" comprises: the third factor is a mapping relation with P and P1; the meaning of the phrase that "the fifth factor is related to P and P2" comprises: the fifth factor is a mapping relation with P to P2.

In one embodiment, the meaning of the phrase that "the third factor is related to P and P1" comprises: the first node obtains the third factor by looking up the table according to P and P1; the meaning of the phrase that "the fifth factor is related to P and P2" comprises: the first node obtains the fifth factor by looking up a table according to P and P2.

In one embodiment, the meaning of the phrase that "the third factor is related to a ratio of P to P1" comprises: the third factor is linearly correlated with a ratio of P to P1; the meaning of the phrase that "the fifth factor is related to a ratio of P to P2" comprises: the fifth factor is linearly correlated with a ratio of P to P2.

In one embodiment, the meaning of the phrase that "the third factor is related to a ratio of P to P1" comprises: the third factor is equal to a ratio of P to P1; the meaning of the phrase that "the fifth factor is related to a ratio of P to P2" comprises: the fifth factor is equal to a ratio of P to P2.

In one embodiment, the meaning of the phrase that "the third factor is related to a ratio of P to P1" comprises: the third factor is a functional relation with a ratio of P to P1; the meaning of the phrase that "the fifth factor is related to a ratio of P to P2" comprises: the fifth factor is a functional relation with a ratio of P to P2.

In one embodiment, the meaning of the phrase that "the third factor is related to a ratio of P to P1" comprises: the third factor is a mapping relation with a ratio of P to P1; the meaning of the phrase that "the fifth factor is related to a ratio of P to P2" comprises: the fifth factor is a mapping relation with a ratio of P to P2.

In one embodiment, the meaning of the phrase that "the third factor is related to a ratio of P to P1" comprises: the first node obtains the third factor by looking up a table according to a ratio of P and P1; the meaning of the phrase that "the fifth factor is related to a ratio of P to P2" comprises: the first node obtains the fifth factor by looking up a table according to a ratio of P and P2.

In one embodiment, P1 is a number of antenna port(s) for the first reference signal, and P2 is a number of antenna port(s) for the second reference signal; the third factor is related to P1 and P2, and the fifth factor is related to P1 and P2.

In one embodiment, the meaning of the phrase that "the third factor is related to P1 and the P2" comprises: the third factor is a functional relation with P1 to P2; the meaning of the phrase that "the fifth factor is related to P and P2" comprises: the fifth factor is a functional relation with P1 to P2.

In one embodiment, the meaning of the phrase that "the third factor is related to P1 and the P2" comprises: the third factor is a mapping relation with P1 to P2; the meaning of the phrase that "the fifth factor is related to P and P2" comprises: the fifth factor is a mapping relation with P1 to P2.

In one embodiment, the meaning of the phrase that "the third factor is related to P1 and the P2" comprises: the first node obtains the third factor by looking up a table according to P1 and P2; the meaning of the phrase that "the fifth factor is related to P and P2" comprises: the first node obtains the fifth factor by looking up a table according to P1 and P2.

In one embodiment, when a number of layer(s) of the first signal is equal to 1, P1 is equal to 1, and P2 is equal to 1, the second factor is equal to 0, and the third factor is equal to 3.

In one embodiment, when a number of layer(s) of the second signal is equal to 1, P1 is equal to 1, and P2 is equal to 1, the fourth factor is equal to 0, and the fifth factor is equal to 3.

In one embodiment, when a number of layer(s) of the first signal is equal to 1, P1 is equal to 2, and P2 is equal to 1, the second factor is equal to 0, and the third factor is equal to 1.76.

In one embodiment, when a number of layer(s) of the second signal is equal to 1, P1 is equal to 2, and P2 is equal to 1, the fourth factor is equal to 0, and the fifth factor is equal to 4.77.

In one embodiment, when a number of layer(s) of the first signal is equal to 1, P1 is equal to 1, and P2 is equal to 2, the second factor is equal to 0, and the third factor is equal to 4.77.

In one embodiment, when a number of layer(s) of the second signal is equal to 1, P1 is equal to 1, and P2 is equal to 2, the fourth factor is equal to 0, and the fifth factor is equal to 1.76.

In one embodiment, when a number of layer(s) of the first signal is equal to 1, P1 is equal to 2, and P2 is equal to 2, the second factor is equal to 0, and the third factor is equal to 3.

In one embodiment, when a number of layer(s) of the second signal is equal to 1, P1 is equal to 2, and P2 is equal to 2, the fourth factor is equal to 0, and the fifth factor is equal to 3.

In one embodiment, when a number of layer(s) of the first signal is equal to 2, P1 is equal to 1, and P2 is equal to 1, the second factor is equal to 3, and the third factor is equal to 3.

In one embodiment, when a number of layer(s) of the second signal is equal to 2, P1 is equal to 1, and P2 is equal to 1, the fourth factor is equal to 3, and the fifth factor is equal to 3.

In one embodiment, when a number of layer(s) of the first signal is equal to 2, P1 is equal to 2, and P2 is equal to 1, the second factor is equal to 3, and the third factor is equal to 1.76.

In one embodiment, when a number of layer(s) of the second signal is equal to 2, P1 is equal to 2, and P2 is equal to 1, the fourth factor is equal to 3, and the fifth factor is equal to 4.77.

In one embodiment, when a number of layer(s) of the first signal is equal to 2, P1 is equal to 1, and P2 is equal to 2, the second factor is equal to 3, and the third factor is equal to 4.77.

In one embodiment, when a number of layer(s) of the second signal is equal to 2, P1 is equal to 1, and P2 is equal to 2, the fourth factor is equal to 3, and the fifth factor is equal to 1.76.

In one embodiment, when a number of layer(s) of the first signal is equal to 2, P1 is equal to 2, and P2 is equal to 2, the second factor is equal to 3, and the third factor is equal to 3.

In one embodiment, when a number of layer(s) of the second signal is equal to 2, P1 is equal to 2, and P2 is equal to 2, the fourth factor is equal to 3, and the fifth factor is equal to 3.

## Embodiment 10

Embodiment 10 illustrates a schematic diagram of a number of layer(s) of the first signal and a number of layer(s) of the second signal according to one embodiment of the present application, as shown in FIG. 10.

In embodiment 10, when the first signal and the second signal carry a same TB, a number of layer(s) of the first signal and a number of layer(s) of the second signal are not greater than a reference number of layer(s); when the first signal and the second signal carry different TBs, a sum of the number of layer(s) of the first signal and the number of layer(s) of the second signal is not greater than the reference number of layer(s).

In one embodiment, relations among a number of layer(s) of the first signal, a number of layer(s) of the second signal, and a number of reference layer(s) are related to whether the first signal and the second signal carry a same TB.

In one embodiment, the number of reference layer(s) is a maximum number of layer(s) of PUSCH.

In one embodiment, the number of reference layer(s) is fixed.

In one embodiment, the number of reference layer(s) is predefined.

In one embodiment, the number of reference layer(s) is configured by a higher-layer parameter.

In one embodiment, the number of reference layer(s) is configured by a higher-layer parameter maxMIMO-Layers.

In one embodiment, a name of a higher-layer parameter used to configure the number of reference layer(s) comprises maxMIMO-Layers.

In one embodiment, the number of reference layer(s) is not greater than 4.

In one embodiment, the number of reference layer(s) is equal to 4.

In one embodiment, the number of reference layer(s) is a positive integer.

## Embodiment 11

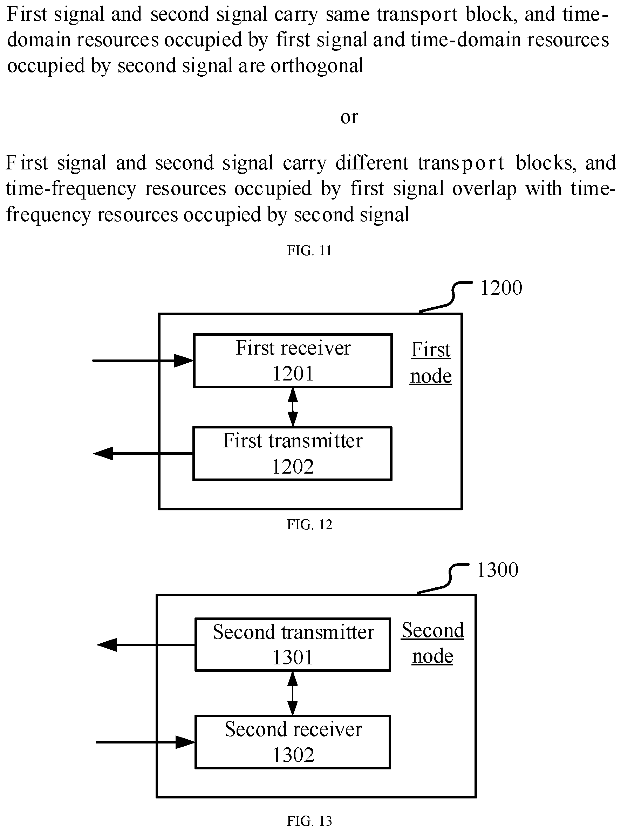

Embodiment 11 illustrates a schematic diagram of a relation between the first signal and the second signal according to one embodiment of the present application, as shown in FIG. 11.

In embodiment 11, when the first signal and the second signal carry a same TB, time-domain resources occupied by the first signal are orthogonal to time-domain resources occupied by the second signal; or, the first signal and the second signal carry different TBs, and time-frequency resources occupied by the first signal overlap with time-frequency resources occupied by the second signal.

In one embodiment, when the first signal and the second signal carry a same TB, an MCS of the first signal is the same as an MCS of the second signal.

In one embodiment, the meaning of the phrase that "time-frequency resources occupied by the first signal and time-frequency resources occupied by the second signal are overlapping" comprises: time-frequency resources occupied by the first signal and time-frequency resources occupied by the second signal are fully overlapping.

In one embodiment, the meaning of the phrase that "time-frequency resources occupied by the first signal and time-frequency resources occupied by the second signal are overlapping" comprises: time-frequency resources occupied by the first signal and time-frequency resources occupied by the second signal are partially or fully overlapping.

In one embodiment, the meaning of the phrase that "time-frequency resources occupied by the first signal and time-frequency resources occupied by the second signal are overlapping" comprises: time-frequency resources occupied by the first signal and time-frequency resources occupied by the second signal comprise at least one same RE.

## Embodiment 12

Embodiment 12 illustrates a structure block diagram of a processor in a first node according to one embodiment of the present application, as shown in FIG. 12. In FIG. 12, a processor 1200 in a first node comprises a first receiver 1201 and a first transmitter 1202.

In one embodiment, the first node is a UE.

In one embodiment, the first node is a relay node.

In one embodiment, the first receiver 1201 comprises at least one of the antenna 452, the receiver 454, the receiving processor 456, the multi-antenna receiving processor 458, the controller/processor 459, the memory 460, or the data source 467 in Embodiment 4.

In one embodiment, the first transmitter 1202 comprises at least one of the antenna 452, the transmitter 454, the transmitting processor 468, the multi-antenna transmitting processor 457, the controller/processor 459, the memory 460, or the data source 467 in Embodiment 4.

A first receiver 1201 receives a first signaling; a first transmitter 1202 transmits a first signal, a second signal, a first reference signal, and a second reference signal in a target time-frequency resource block.

In embodiment 12, the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB.

In one embodiment, when the first signal and the second signal carry a same TB, the first signaling indicates a target MCS, both an MCS of the first signal and an MCS of the second signal are the target MCS, the target MCS is used to determine a target time density, and a time density of the first reference signal and a time density of the second reference signal are equal to the target time density; when the first signal and the second signal carry different TBs, the first signaling indicates a first MCS and a second MCS, an MCS of the first signal is the first MCS, an MCS of the second signal is the second MCS, the first MCS is used to determine a time density of the first reference signal, and the second MCS is used to determine a time density of the second reference signal.

In one embodiment, both a time density of the first reference signal and a time density of the second reference signal are equal to a target time density; when the first signal and the second signal carry a same TB, the first signaling indicates a target MCS, both an MCS of the first signal and an MCS of the second signal are the target MCS, and the target MCS is used to determine the target time density; when the first signal and the second signal carry different TBs, the first signaling indicates a first MCS and a second MCS, an MCS of the first signal is the first MCS, an MCS of the second signal is the second MCS, the first MCS is used to determine a first time density, the second MCS is used to determine a second time density, and at least one of the first time density or the second time density is used to determine the target time density.

In one embodiment, transmit power of the first reference signal per RE is linearly correlated with a linear value of a first target factor, and transmit power of the second reference signal per RE is linearly correlated with a linear value of a second target factor; the first target factor and the second target factor are related to whether the first signal and the second signal carry a same TB.

In one embodiment, when the first signal and the second signal carry a same TB and the first signal and the second signal are orthogonal in time domain, the first target factor is equal to a second factor, and the second target factor is equal to a fourth factor; when the first signal and the second signal carry different TBs and time-frequency resources occupied by the first signal overlap with time-frequency resources occupied by the second signal, the first target factor is equal to a sum of a second factor and a third factor, and the second target factor is equal to a sum of a fourth factor and a fifth factor; the second factor is related to a number of layer(s) of the first signal, and the fourth factor is related to a number of layer(s) of the second signal.

In one embodiment, when the first signal and the second signal carry a same TB, a number of layer(s) of the first signal and a number of layer(s) of the second signal are not greater than a reference number of layer(s); when the first signal and the second signal carry different TBs, a sum of the number of layer(s) of the first signal and the number of layer(s) of the second signal is not greater than the reference number of layer(s).

In one embodiment, when the first signal and the second signal carry a same TB, time-domain resources occupied by the first signal are orthogonal to time-domain resources occupied by the second signal; or, the first signal and the second signal carry different TBs, and time-frequency resources occupied by the first signal overlap with time-frequency resources occupied by the second signal.

In one embodiment, the first transmitter 1202 transmits a first demodulation reference signal and a second demodulation reference signal in the target time-frequency resource block; herein, antenna port(s) of the first reference signal is(are) associated with antenna port(s) of the first demodulation reference signal; antenna port(s) of the second reference signal is(are) associated with antenna port(s) of the second demodulation reference signal.

## Embodiment 13

Embodiment 13 illustrates a structure block diagram of a processor in a second node according to one embodiment of the present application, as shown in FIG. 13. In FIG. 13, a processor 1300 of a second node comprises a second transmitter 1301 and a second receiver 1302.

In one embodiment, the second node is a base station.

In one embodiment, the second node is a relay node.

In one embodiment, the second transmitter 1301 comprises at least one of the antenna 420, the transmitter 418, the transmitting processor 416, the multi-antenna transmitting processor 471, the controller/processor 475, or the memory 476 in Embodiment 4.

In one embodiment, the second receiver 1302 comprises at least one of the antenna 420, the receiver 418, the receiving processor 470, the multi-antenna receiving processor 472, the controller/processor 475, the memory 476 in Embodiment 4.

A second transmitter 1301 transmits a first signaling;

a second receiver 1302 receives a first signal, a second signal, a first reference signal, and a second reference signal in a target time-frequency resource block;

In embodiment 13, the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB.

In one embodiment, when the first signal and the second signal carry a same TB, the first signaling indicates a target MCS, both an MCS of the first signal and an MCS of the second signal are the target MCS, the target MCS is used to determine a target time density, and a time density of the first reference signal and a time density of the second reference signal are equal to the target time density; when the first signal and the second signal carry different TBs, the first signaling indicates a first MCS and a second MCS, an MCS of the first signal is the first MCS, an MCS of the second signal is the second MCS, the first MCS is used to determine a time density of the first reference signal, and the second MCS is used to determine a time density of the second reference signal.

In one embodiment, both a time density of the first reference signal and a time density of the second reference signal are equal to a target time density; when the first signal and the second signal carry a same TB, the first signaling indicates a target MCS, both an MCS of the first signal and an MCS of the second signal are the target MCS, and the target MCS is used to determine the target time density; when the first signal and the second signal carry different TBs, the first signaling indicates a first MCS and a second MCS, an MCS of the first signal is the first MCS, an MCS of the second signal is the second MCS, the first MCS is used to determine a first time density, the second MCS is used to determine a second time density, and at least one of the first time density or the second time density is used to determine the target time density.

In one embodiment, transmit power of the first reference signal per RE is linearly correlated with a linear value of a first target factor, and transmit power of the second reference signal per RE is linearly correlated with a linear value of a second target factor; the first target factor and the second target factor are related to whether the first signal and the second signal carry a same TB.

In one embodiment, when the first signal and the second signal carry a same TB and the first signal and the second signal are orthogonal in time domain, the first target factor is equal to a second factor, and the second target factor is equal to a fourth factor; when the first signal and the second signal carry different TBs and time-frequency resources occupied by the first signal overlap with time-frequency resources occupied by the second signal, the first target factor is equal to a sum of a second factor and a third factor, and the second target factor is equal to a sum of a fourth factor and a fifth factor; the second factor is related to a number of layer(s) of the first signal, and the fourth factor is related to a number of layer(s) of the second signal.

In one embodiment, when the first signal and the second signal carry a same TB, a number of layer(s) of the first signal and a number of layer(s) of the second signal are not greater than a reference number of layer(s); when the first signal and the second signal carry different TBs, a sum of the number of layer(s) of the first signal and the number of layer(s) of the second signal is not greater than the reference number of layer(s).

In one embodiment, when the first signal and the second signal carry a same TB, time-domain resources occupied by the first signal are orthogonal to time-domain resources occupied by the second signal; or, the first signal and the second signal carry different TBs, and time-frequency resources occupied by the first signal overlap with time-frequency resources occupied by the second signal.

In one embodiment, the second receiver 1302 receives a first demodulation reference signal and a second demodulation reference signal in the target time-frequency resource block; herein, antenna port(s) of the first reference signal is(are) associated with antenna port(s) of the first demodulation reference signal; antenna port(s) of the second reference signal is(are) associated with antenna port(s) of the second demodulation reference signal.

The ordinary skill in the art may understand that all or part of steps in the above method may be implemented by instructing related hardware through a program. The program may be stored in a computer readable storage medium, for example Read-Only Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The user equipment, terminal and UE include but are not limited to Unmanned Aerial Vehicles (UAVs), communication modules on UAVs, telecontrolled aircrafts, aircrafts, diminutive airplanes, mobile phones, tablet computers, notebooks, vehicle-mounted communication equipment, wireless sensors, network cards, Internet of Things (IoT) terminals, RFID terminals, NB-IOT terminals, Machine Type Communication (MTC) terminals, enhanced MTC (eMTC) terminals, data card, network cards, vehicle-mounted communication equipment, low-cost mobile phones, low-cost tablets and other wireless communication devices. The UE and terminal in the present application include but not limited to unmanned aerial vehicles, communication modules on unmanned aerial vehicles, telecontrolled aircrafts, aircrafts, diminutive airplanes, mobile phones, tablet computers, notebooks, vehicle-mounted communication equipment, wireless sensor, network cards, terminals for Internet of Things, RFID terminals, NB-IOT terminals, Machine Type Communication (MTC) terminals, enhanced MTC (eMTC) terminals, data cards, low-cost mobile phones, low-cost tablet computers, etc. The base station or system device in the present application includes but is not limited to macro-cellular base stations, micro-cellular base stations, home base stations, relay base station, gNB (NR node B), Transmitter Receiver Point (TRP), and other radio communication equipment.

The above are merely the preferred embodiments of the present application and are not intended to limit the scope of protection of the present application. Any changes and modifications made based on the embodiments described in the specification, if similar partial or complete technical effects can be achieved, shall be deemed obvious and fall within the scope of protection of the present invention.

**Claims**

1. A first node for wireless communications, comprising:

   a first receiver, receiving a first signaling; and
   a first transmitter, transmitting a first signal, a second signal, a first reference signal, and a second reference signal in a target time-frequency resource block;
   wherein the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB (Transport Block).

2. The first node according to claim 1, wherein when the first signal and the second signal carry a same TB, the first signaling indicates a target MCS, both an MCS of the first signal and an MCS of the second signal are the target MCS, the target MCS is used to determine a target time density, and a time density of the first reference signal and a time density of the second reference signal are equal to the target time density; when the first signal and the second signal carry different TBs, the first signaling indicates a first MCS and a second MCS, an MCS of the first signal is the first MCS, an MCS of the second signal is the second MCS, the first MCS is used to determine a time density of the first reference signal, and the second MCS is used to determine a time density of the second reference signal.

3. The first node according to claim 1, wherein both a time density of the first reference signal and a time density of the second reference signal are equal to a target time density; when the first signal and the second signal carry a same TB, the first signaling indicates a target MCS, both an MCS of the first signal and an MCS of the second signal are the target MCS, and the target MCS is used to determine the target time density; when the first signal and the second signal carry different TBs, the first signaling indicates a first MCS and a second MCS, an MCS of the first signal is the first MCS, an MCS of the second signal is the second MCS, the first MCS is used to determine a first time density, the second MCS is used to determine a second time density, and at least one of the first time density or the second time density is used to determine the target time density.

4. The first node according to any of claims 1-3, wherein transmit power of the first reference signal per RE (Resource Element) is linearly correlated with a linear value of a first target factor, and transmit power of the second reference signal per RE is linearly correlated with a linear value of a second target factor;

the first target factor and the second target factor are related to whether the first signal and the second signal carry a same TB.

5. The first node according to claim 4, wherein when the first signal and the second signal carry a same TB and the first signal and the second signal are orthogonal in time domain, the first target factor is equal to a second factor, and the second target factor is equal to a fourth factor; when the first signal and the second signal carry different TBs and time-frequency resources occupied by the first signal overlap with time-frequency resources occupied by the second signal, the first target factor is equal to a sum of a second factor and a third factor, and the second target factor is equal to a sum of a fourth factor and a fifth factor; the second factor is related to a number of layer(s) of the first signal, and the fourth factor is related to a number of layer(s) of the second signal.

6. The first node according to any of claims 1-5, wherein when the first signal and the second signal carry a same TB, a number of layer(s) of the first signal and a number of layer(s) of the second signal are not greater than a reference number of layer(s); when the first signal and the second signal carry different TBs, a sum of the number of layer(s) of the first signal and the number of layer(s) of the second signal is not greater than the reference number of layer(s).

7. The first node according to any of claims 1-4, wherein when the first signal and the second signal carry a same TB, time-domain resources occupied by the first signal are orthogonal to time-domain resources occupied by the second signal; or, the first signal and the second signal carry different TBs, and time-frequency resources occupied by the first signal overlap with time-frequency resources occupied by the second signal.

8. A second node for wireless communications, comprising:

   a second transmitter, transmitting a first signaling; and
   a second receiver, receiving a first signal, a second signal, a first reference signal, and a second reference signal in a target time-frequency resource block;
   wherein the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB.

9. The second node according to claim 8, wherein when the first signal and the second signal carry a same TB, the first signaling indicates a target MCS, both an MCS of the first signal and an MCS of the second signal are the target MCS, the target MCS is used to determine a target time density, and a time density of the first reference signal and a time density of the second reference signal are equal to the target time density; when the first signal and the second signal carry different TBs, the first signaling indicates a first MCS and a second MCS, an MCS of the first signal is the first MCS, an MCS of the second signal is the second MCS, the first MCS is used to determine a time density of the first reference signal, and the second MCS is used to determine a time density of the second reference signal.

10. The second node according to claim 8, wherein both a time density of the first reference signal and a time density of the second reference signal are equal to a target time density; when the first signal and the second signal carry a same TB, the first signaling indicates a target MCS, both an MCS of the first signal and an MCS of the second signal are the target MCS, and the target MCS is used to determine the target time density; when the first signal and the second signal carry different TBs, the first signaling indicates a first MCS and a second MCS, an MCS of the first signal is the first MCS, an MCS of the second signal is the second MCS, the first MCS is used to determine a first time density, the second MCS is used to determine a second time density, and at least one of the first time density or the second time density is used to determine the target time density.

11. The second node according to any of claims 8-10, wherein transmit power of the first reference signal per RE is linearly correlated with a linear value of a first target factor, and transmit power of the second reference signal per RE is linearly correlated with a linear value of a second target factor; the first target factor and the second target factor are related to whether the first signal and the second signal carry a same TB.

12. The second node according to claim 11, wherein when the first signal and the second signal carry a same TB and the first signal and the second signal are orthogonal in time domain, the first target factor is equal to a second factor, and the second target factor is equal to a fourth factor; when the first signal and the second signal carry different TBs and time-frequency resources occupied by the first signal overlap with time-frequency resources occupied by the second signal, the first target factor is equal to a sum of a second factor and a third factor, and the second target factor is equal to a sum of a fourth factor and a fifth factor; the second factor is related to a number of layer(s) of the first signal, and the fourth factor is related to a number of layer(s) of the second signal.

13. The second node according to any of claims 8-12, wherein when the first signal and the second signal carry a same TB, a number of layer(s) of the first signal and a number of layer(s) of the second signal are not greater than a reference number of layer(s); when the first signal and the second signal carry different TBs, a sum of the number of layer(s) of the first signal and the number of layer(s) of the second signal is not greater than the reference number of layer(s).

14. The second node according to any of claims 8-11, wherein
when the first signal and the second signal carry a same TB, time-domain resources occupied by the first signal are orthogonal to time-domain resources occupied by the second signal; or, the first signal and the second signal carry different TBs, and time-frequency resources occupied by the first signal overlap with time-frequency resources occupied by the second signal.

15. A method in a first node for wireless communications, comprising:

   receiving a first signaling; and
   transmitting a first signal, a second signal, a first reference signal, and a second reference signal in a target time-frequency resource block;
   wherein the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB.

16. The method according to claim 15, wherein when the first signal and the second signal carry a same TB, the first signaling indicates a target MCS, both an MCS of the first signal and an MCS of the second signal are the target MCS, the target MCS is used to determine a target time density, and a time density of the first reference signal and a time density of the second reference signal are equal to the target time density; when the first signal and the second signal carry different TBs, the first signaling indicates a first MCS and a second MCS, an MCS of the first signal is the first MCS, an MCS of the second signal is the second MCS, the first MCS is used to determine a time density of the first reference signal, and the second MCS is used to determine a time density of the second reference signal.

17. The method according to claim 15, wherein both a time density of the first reference signal and a time density of the second reference signal are equal to a target time density; when the first signal and the second signal carry a same TB, the first signaling indicates a target MCS, both an MCS of the first signal and an MCS of the second signal are the target MCS, and the target MCS is used to determine the target time density; when the first signal and the second signal carry different TBs, the first signaling indicates a first MCS and a second MCS, an MCS of the first signal is the first MCS, an MCS of the second signal is the second MCS, the first MCS is used to determine a first time density, the second MCS is used to determine a second time density, and at least one of the first time density or the second time density is used to determine the target time density.

18. The method according to any of claims 15-17, wherein transmit power of the first reference signal per RE is linearly correlated with a linear value of a first target factor, and transmit power of the second reference signal per RE is linearly correlated with a linear value of a second target factor;
the first target factor and the second target factor are related to whether the first signal and the second signal carry a same TB.

19. The method according to claim 18, wherein when the first signal and the second signal carry a same TB and the first signal and the second signal are orthogonal in time domain, the first target factor is equal to a second factor, and the second target factor is equal to a fourth factor; when the first signal and the second signal carry different TBs and time-frequency resources occupied by the first signal overlap with time-frequency resources occupied by the second signal, the first target factor is equal to a sum of a second factor and a third factor, and the second target factor is equal to a sum of a fourth factor and a fifth factor; the second factor is related to a number of layer(s) of the first signal, and the fourth factor is related to a number of layer(s) of the second signal.

20. The method according to any of claims 15-19, when the first signal and the second signal carry a same TB, a number of layer(s) of the first signal and a number of layer(s) of the second signal are not greater than a reference number of layer(s); when the first signal and the second signal carry different TBs, a sum of the number of layer(s) of the first signal and the number of layer(s) of the second signal is not greater than the reference number of layer(s).

21. The method according to any of claims 15-18, wherein when the first signal and the second signal carry a same TB, time-domain resources occupied by the first signal are orthogonal to time-domain resources occupied by the second signal; or, the first signal and the second signal carry different TBs, and time-frequency resources occupied by the first signal overlap with time-frequency resources occupied by the second signal.

22. A method in a second node for wireless communications, comprising:

transmitting a first signaling; and
receiving a first signal, a second signal, a first reference signal, and a second reference signal in a target time-frequency resource block;
wherein the first signaling is used to indicate the target time-frequency resource block; the first signaling is used to indicate a first reference signal resource group and a second reference signal resource group, the first reference signal resource group is used to determine antenna port(s) for transmitting the first signal, and the second reference signal resource group is used to determine antenna port(s) for transmitting the second signal; the first reference signal is associated with the first reference signal resource group, and the second reference signal is associated with the second reference signal resource group; a time density of the first reference signal and a time density of the second reference signal are related to whether the first signal and the second signal carry a same TB.

23. The method according to claim 22, wherein when the first signal and the second signal carry a same TB, the first signaling indicates a target MCS, both an MCS of the first signal and an MCS of the second signal are the target MCS, the target MCS is used to determine a target time density, and a time density of the first reference signal and a time density of the second reference signal are equal to the target time density; when the first signal and the second signal carry different TBs, the first signaling indicates a first MCS and a second MCS, an MCS of the first signal is the first MCS, an MCS of the second signal is the second MCS, the first MCS is used to determine a time density of the first reference signal, and the second MCS is used to determine a time density of the second reference signal.

24. The method according to claim 22, wherein both a time density of the first reference signal and a time density of the second reference signal are equal to a target time density; when the first signal and the second signal carry a same TB, the first signaling indicates a target MCS, both an MCS of the first signal and an MCS of the second signal are the target MCS, and the target MCS is used to determine the target time density; when the first signal and the second signal carry different TBs, the first signaling indicates a first MCS and a second MCS, an MCS of the first signal is the first MCS, an MCS of the second signal is the second MCS, the first MCS is used to determine a first time density, the second MCS is used to determine a second time density, and at least one of the first time density or the second time density is used to determine the target time density.

25. The method according to any of claims 22-24, wherein transmit power of the first reference signal per RE (Resource Element) is linearly correlated with a linear value of a first target factor, and transmit power of the second reference signal per RE is linearly correlated with a linear value of a second target factor; the first target factor and the second target factor are related to whether the first signal and the second signal carry a same TB.

26. The method according to claim 25, wherein when the first signal and the second signal carry a same TB and the first signal and the second signal are orthogonal in time domain, the first target factor is equal to a second factor, and the second target factor is equal to a fourth factor; when the first signal and the second signal carry different TBs and time-frequency resources occupied by the first signal overlap with time-frequency resources occupied by the second signal, the first target factor is equal to a sum of a second factor and a third factor, and the second target factor is equal to a sum of a fourth factor and a fifth factor; the second factor is related to a number of layer(s) of the first signal, and the fourth factor is related to a number of layer(s) of the second signal.

27. The method according to any of claims 22-26, when the first signal and the second signal carry a same TB, a number of layer(s) of the first signal and a number of layer(s) of the second signal are not greater than a reference number of layer(s); when the first signal and the second signal carry different TBs, a sum of the number of layer(s) of the first signal and the number of layer(s) of the second signal is not greater than the reference number of layer(s).

28. The method according to any of claims 22-25, wherein when the first signal and the second signal carry a same TB, time-domain resources occupied by the first signal are orthogonal to time-domain resources occupied by the second signal; or, the first signal and the second signal carry different TBs, and time-frequency resources occupied by the first signal overlap with time-frequency resources occupied by the second signal.

**100**

First node

Receiving first signaling 101

transmitting first signal, second signal, first reference signal, and second reference signal in target time-frequency resource block 102

FIG. 1

5GS/EPS 200

HSS/UDM 220

NG-RAN 202

UE 201

NR Node B 203

Other NR Nodes B 204

UE 241

MME/AMF /SMF 211

Other MMEs/AMFs/SMFs 214

S-GW/UPF 212

P-GW/UPF 213

Internet Service 230

5GC/EPC 210

FIG. 2

**Control Plane**
**300**

L3

RRC — 306

305

PDCP — 304

L2

RLC — 303

MAC — 302

L1

PHY — 301

**User Plane**
**350**

SDAP — 356

355

L2

PDCP — 354

RLC — 353

MAC — 352

L1

PHY — 351

FIG. 3

410

416 — Transmitting processor

471 — Multi-antenna transmitting processor

418 — Transmitter / Receiver

420

452 — Transmitter / Receiver

454

457 — Multi-antenna transmitting processor

450

468 — Transmitting processor

475 — Controller /processor

Memory

476

470 — Receiving processor

472 — Multi-antenna receiving processor

420 — Transmitter / Receiver

418

452 — Transmitter / Receiver

454

458 — Multi-antenna receiving processor

459 — Controller /processor

Memory — 460

Data source — 467

456 — Receiving processor

FIG. 4

```
┌──────────────────────┐                      ┌─────────────────┐
│  N02. Second node    │                      │  U01. First node │
└──────────────────────┘                      └─────────────────┘
┌──────────────────────────────────┐
│ S5201. transmitting first signaling │
└──────────────────────────────────┘
                      ──────first signaling──────────►
                              ┌────────────────────────────────┐
                              │ S5101. receiving first signaling │
                              └────────────────────────────────┘
                              ┌────────────────────────────────┐
                              │ S5102. transmitting first signal, │
                              │ second signal, first reference signal, │
                              │ and second reference signal in target │
                              │ time-frequency resource block    │
                              └────────────────────────────────┘
              first signal, second signal,
         ◄──── first reference signal, ────
              and second reference signal

┌────────────────────────────────┐
│ S5202. receiving first signal, second │
│ signal, first reference signal, and │
│ second reference signal in target time- │
│ frequency resource block         │
└────────────────────────────────┘
```

S5103. transmitting first demodulation reference signal and second demodulation reference signal in target time-frequency resource block

F1. Optional

first demodulation reference signal and second demodulation reference signal

S5203. receiving first demodulation reference signal and second demodulation reference signal in target time-frequency resource block

End          End

FIG. 5

First signaling $\xrightarrow{\text{indicating}}$ Target MCS $\xrightarrow[\text{to determine}]{\text{being used}}$ Target time density

MCS of first signal and MCS of second signal are both target MCS

Both time density of first reference signal and time density of second reference signal are equal to target time density

(a) When first signal and second signal carry same transport block

First signaling $\xrightarrow{\text{indicating}}$ First MCS and second MCS

First MCS $\xrightarrow[\text{determine}]{\text{being used to}}$ Time density of first reference signal

Second MCS $\xrightarrow[\text{determine}]{\text{being used to}}$ Time density of second reference signal

MCS of first signal is first MCS, and MCS of second signal is second MCS

(b) When first Signal and second signal carry different transport blocks

FIG. 6

First signaling $\xrightarrow{\text{indicating}}$ Target MCS $\xrightarrow[\text{determine}]{\text{being used to}}$ Target time density

MCS of first signal and MCS of second signal are both target MCS

(a) When first signal and second signal carry same transport block

First signaling $\xrightarrow{\text{indicating}}$ First MCS and Second MCS

First MCS $\xrightarrow[\text{determine}]{\text{being used to}}$ First time density

Second MCS $\xrightarrow[\text{determine}]{\text{being used to}}$ Second time density

At least one of first time density or second time density $\xrightarrow[\text{determine}]{\text{being used to}}$ Target time density

MCS of first signal is first MCS, and MCS of second signal is second MCS

(b) When first signal and second signal carry different transport blocks

Both time density of first reference signal and time density of second reference signal are equal to target time density

FIG. 7

34

Transmit power of first reference signal on each RE ←————— being linearly correlated to ————— Linear value of first target factor

Transmit power of second reference signal on each RE ←————— being linearly correlated to ————— Linear value of second target factor

First target factor and second target factor ←————— being related to ————— Whether first signal and second signal carry same transport block

FIG. 8

First Target factor=second factor

Second target factor = fourth factor

(a) When first signal and second signal carry same transport block and first signal and second signal are orthogonal in time domain

First target factor=second factor + third factor

Second target factor=Fourth factor + Fifth factor

(b) When first signal and second signal carry different transport blocks and time-frequency resources occupied by first signal overlap with time-frequency resources occupied by second signal

Second factor ←————— being related to ————— Number of layer(s) of first signal

Fourth factor ←————— being related to ————— Number of layer(s) of second signal

FIG. 9

Both number of layer(s) of first signal and number of layer(s) of second signal are not greater than reference Number of layer(s)

(a) When first signal and the second signal carry same transport block

Sum of number of layer(s) of first signal and number of layer(s) of second signal is not greater than reference number of layer(s)

(b) When first signal and second signal carry different transport blocks

FIG. 10

First signal and second signal carry same transport block, and time-domain resources occupied by first signal and time-domain resources occupied by second signal are orthogonal

or

First signal and second signal carry different transport blocks, and time-frequency resources occupied by first signal overlap with time-frequency resources occupied by second signal

FIG. 11

┌─ 1200

First receiver
1201

First
node

First transmitter
1202

FIG. 12

┌─ 1300

Second transmitter
1301

Second
node

Second receiver
1302

FIG. 13

## INTERNATIONAL SEARCH REPORT

| International application No. |
|---|
| **PCT/CN2023/072521** |

| A. | CLASSIFICATION OF SUBJECT MATTER |
|---|---|
| | H04L 5/00(2006.01)i |

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, DWPI, CNKI, USTXT, WOTXT, EPTXT, 3GPP: 信令, 信号, 天线端口, 参考信号, 时间密度, 相同, 传输块, signalling, signal, antenna, port, reference, time, density, same, transmission block

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113162736 A (SHANGHAI LANGBO COMMUNICATION TECHNOLOGY CO., LTD.) 23 July 2021 (2021-07-23) description, paragraphs [0002]-[0653], and claims 1-10 | 1-28 |
| X | CN 111490861 A (SHANGHAI LANGBO COMMUNICATION TECHNOLOGY CO., LTD.) 04 August 2020 (2020-08-04) description, paragraphs [0002]-[0591] | 1-28 |
| A | US 2016088512 A1 (ERICSSON TELEFON AB. L. M.) 24 March 2016 (2016-03-24) entire document | 1-28 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 April 2023** | **27 April 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

# EP 4 456 468 A1

**INTERNATIONAL SEARCH REPORT**
**Information on patent family members**

International application No.

**PCT/CN2023/072521**

| Patent document cited in search report | | | Publication date (day/month/year) | Patent family member(s) | | | Publication date (day/month/year) |
|---|---|---|---|---|---|---|---|
| CN | 113162736 | A | 23 July 2021 | None | | | |
| CN | 111490861 | A | 04 August 2020 | None | | | |
| US | 2016088512 | A1 | 24 March 2016 | EP | 3198768 | A1 | 02 August 2017 |
| | | | | EP | 3198768 | B1 | 11 August 2021 |
| | | | | WO | 2016046688 | A1 | 31 March 2016 |
| | | | | US | 9888406 | B2 | 06 February 2018 |

Form PCT/ISA/210 (patent family annex) (July 2022)